# EUROPEAN PATENT SPECIFICATION

(11) **EP 4 228 235 B1**
(45) Date of publication and mention of the grant of the patent: **25.11.2026**
(21) Application number: 21879733.0
(22) Date of filing: 11.08.2021
(51) Int. Cl.: H04M 11/00, H04Q 9/00, H04M 11/02, H04B 3/54, G08C 17/00

(54) **APPARATUS INFORMATION REGISTRATION SYSTEM**
SYSTEM ZUR REGISTRIERUNG VON GERÄTEINFORMATIONEN
SYSTÈME D'ENREGISTREMENT D'INFORMATIONS D'APPAREIL

(30) Priority: 12.10.2020 JP 2020171869
(43) Date of publication of application: 16.08.2023
(73) Proprietor: Panasonic Intellectual Property Management Co., Ltd., Osaka-shi, Osaka 540-6207 (JP)
(72) Inventor: KATAOKA, Masanori, Osaka-shi, Osaka 540-6207 (JP); KOGA, Hisao, Osaka-shi, Osaka 540-6207 (JP); KOUNO, Yoshinobu, Osaka-shi, Osaka 540-6207 (JP)
(74) Representative: Eisenführ Speiser
(86) International application number: PCT/JP2021/029603
(87) International publication number: WO 2022/079991

(56) References cited:
- WO-A1-2017/169957
- JP-A- 2011 216 973
- JP-A- 2013 034 146
- JP-A- 2016 100 755
- US-A1- 2011 173 447
- US-A1- 2014 062 680
- US-A1- 2014 180 447

## Description

### Technical Field

The present disclosure relates to an apparatus information registration system.

### Background Art

In the current age of Internet of Things (IoT), various electronic apparatuses such as household appliances are connected to a network. Patent Literature (hereinafter referred to "PTL") 1 discloses a technique in which a smartphone is paired with a household appliance and the household appliance is connected to a network via the smartphone. Pairing devices through using power line communication are for example described in US 2011/0173447 A1, US 2014/0062680 A1, JP 2016-100755 A and WO 2017/169957 A1.

### Citation List

### Patent Literature

PTL 1
Japanese Patent Application Laid-Open No. 2019-161493

### Summary of Invention

However, in a case where information on an apparatus such as a household appliance is registered in a server connected to a network, it is troublesome to pair the household appliance with a terminal such as a smartphone and to connect the apparatus to the network.

One non-limiting and exemplary embodiment facilitates providing an apparatus information registration system capable of registering information on an apparatus easily.

An apparatus information registration system according to claim 1 includes: a first apparatus that is connected to a power line and a network; a second apparatus that is connected to the power line and communicates with the first apparatus; and a server that stores first apparatus information on the first apparatus in association with user information on a user of the first apparatus, is connected to the network, and communicates with the first apparatus. The second apparatus acquires the first apparatus information from the first apparatus via the power line. The second apparatus transmits the first apparatus information having been acquired and second apparatus information on the second apparatus to the server via the first apparatus. The server acquires the user information corresponding to the first apparatus information having been transmitted from the second apparatus. The server transmits approval request information, which requests approval for registration of the second apparatus information, to a terminal tied to the user information having been acquired. In a case where the server receives approval response information, which approves the registration of the second apparatus information, from the terminal, the server registers the second apparatus information.

According to an exemplary embodiment of the present disclosure, it is possible to register information on an apparatus easily.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 illustrates a configuration example of an apparatus information registration system according to Embodiment 1;
FIG. 2 illustrates a block configuration example of a base unit;
FIG. 3 illustrates a block configuration example of a handset;
FIG. 4 illustrates a block configuration example of a server;
FIG. 5 illustrates a block configuration example of a terminal;
FIG. 6A illustrates an example of a table stored in a storer of the server;
FIG. 6B illustrates an example of a table stored in the storer of the server;
FIG. 7 is a diagram provided for describing exemplary operations to register the base unit of the apparatus information registration system;
FIG. 8 is a diagram provided for describing exemplary operations to register the handset of the apparatus information registration system;
FIG. 9 illustrates a configuration example of an apparatus information registration system according to Embodiment 2;
FIG. 10A is a sequence diagram illustrating exemplary operations in the apparatus information registration system in FIG. 9;
FIG. 10B is a sequence diagram illustrating exemplary operations in the apparatus information registration system in FIG. 9;
FIG. 10C is a sequence diagram illustrating exemplary operations in the apparatus information registration system in FIG. 9;
FIG. 10D is a sequence diagram illustrating exemplary operations in the apparatus information registration system in FIG. 9;
FIG. 11A is a sequence diagram illustrating exemplary operations in an apparatus information registration system according to Embodiment 3;
FIG. 11B is a sequence diagram illustrating exemplary operations in the apparatus information registration system according to Embodiment 3;
FIG. 11C is a sequence diagram illustrating exemplary operations in the apparatus information registration system according to Embodiment 3;
FIG. 12A is a sequence diagram illustrating exemplary operations in an apparatus information registration system according to Embodiment 4;
FIG. 12B is a sequence diagram illustrating exemplary operations in the apparatus information registration system according to Embodiment 4;
FIG. 12C is a sequence diagram illustrating exemplary operations in the apparatus information registration system according to Embodiment 4;
FIG. 13 is a diagram provided for describing examples of automatic connection and manual connection of the handset;
FIG. 14 is a diagram provided for describing an example of the automatic connection and the manual connection of the handset;
FIG. 15 is a diagram provided for describing an example of the automatic connection of the handset by the base unit; and
FIG. 16 is a diagram provided for describing an example of suppression of erroneous connection of the handset to the base unit.

### Description of Embodiments

Hereinafter, embodiments of the present disclosure will be described in detail with reference to the accompanying drawings. However, a detailed description more than necessary may be omitted, such as a detailed description of an already well-known matter and a duplicate description for a substantially identical configuration, to avoid unnecessary redundancy of the following description and to facilitate understanding by a person skilled in the art.

Note that, the accompanying drawings and the following description are provided for a person skilled in the art to sufficiently understand the present disclosure, and are not intended to limit the subject matter described in the claims.

(Embodiment 1)

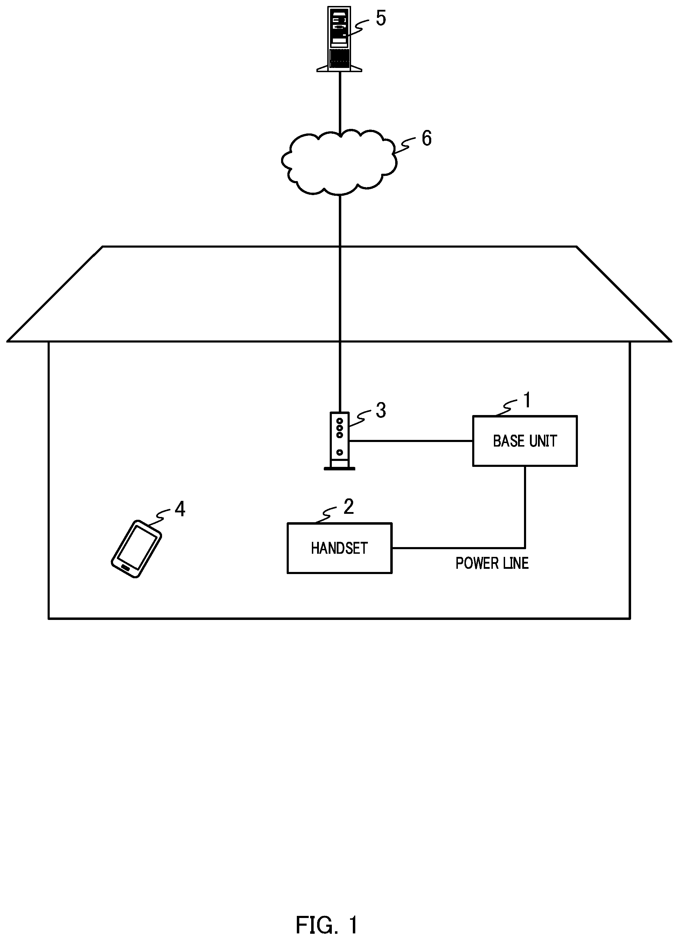

FIG. 1 illustrates a configuration example of an apparatus information registration system according to Embodiment 1. As illustrated in FIG. 1, the apparatus information registration system includes base unit 1, handset 2, router 3, terminal 4, and server 5.

Base unit 1 is an electronic apparatus that has the function of power line communication (PLC) and functions as a base unit in PLC. Base unit 1 may be, for example, an electronic apparatus such as an intercom, a router, or a PLC base unit.

Handset 2 is an electronic apparatus that has the function of PLC and functions as a handset in PLC. Handset 2 may be, for example, a household appliance such as a microwave oven, a refrigerator, or a washing machine.

Base unit 1 and handset 2 are connected to a power line and perform communication based on PLC. The power line through which PLC is performed may be referred to, for example, as a PLC network or a power line network. Note that, although one handset 2 is connected to one base unit 1 in FIG. 1, the present disclosure is not limited thereto. A plurality of handsets 2 may be connected to base unit 1.

Router 3 connects base unit 1 to network 6 such as the Internet. Base unit 1 and router 3 may be connected, for example, by Ethernet (registered trademark) or may be connected by radio communication such as Wi-fi (registered trademark). Note that, base unit 1 may have the function of router 3. In this case, the apparatus information registration system may not include router 3.

Terminal 4 is a mobile terminal such as a smartphone, a tablet terminal, or a notebook personal computer (PC). Further, terminal 4 may be a terminal such as a PC. For example, terminal 4 is connected to network 6 via a radio communication system, such as a mobile phone system, or router 3.

Server 5 is connected to network 6. Information on base unit 1, handset 2, and a user is registered in server 5. The user is, for example, the purchaser, utilizer, or owner of base unit 1 and handset 2. That is, server 5 performs unitary management of information on the household appliances of the user. Server 5 may be a cloud server.

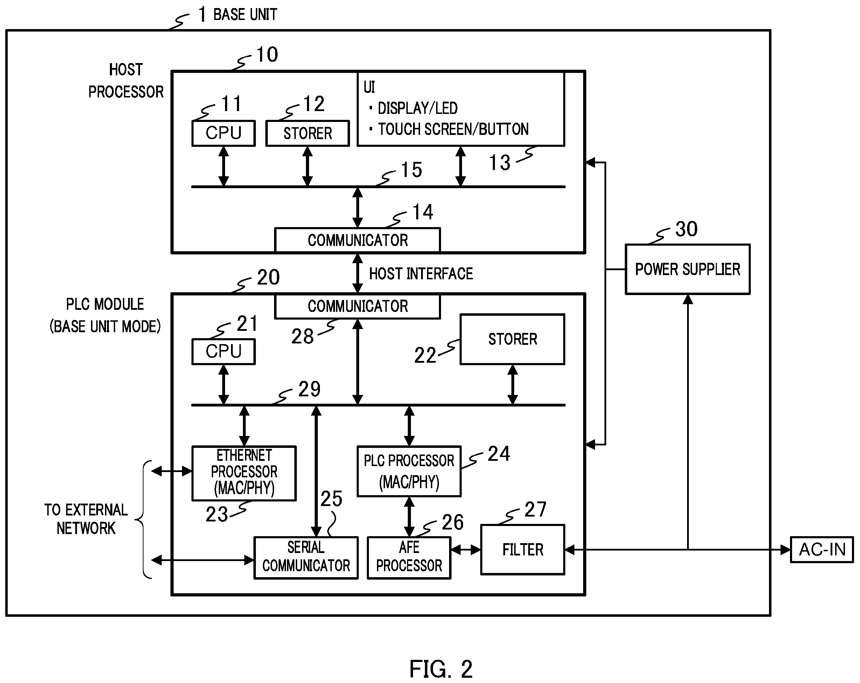

FIG. 2 illustrates a block configuration example of base unit 1. As illustrated in FIG. 2, base unit 1 includes host processor 10, PLC module 20, and power supplier 30.

Host processor 10 controls base unit 1 in its entirety. PLC module 20 controls PLC. PLC module 20 has the function as a base unit. Power supplier 30 includes an AC-DC power supply and a DC-DC power supply and supplies power obtained from the power line to host processor 10 and PLC module 20 via the AC-DC power supply and the DC-DC power supply.

Host processor 10 includes central processing unit (CPU) 11, storer 12, user interface (UI) 13, communicator 14, and bus 15. CPU 11, storer 12, UI 13, and communicator 14 are connected to bus 15.

CPU 11 controls host processor 10 in its entirety. For example, CPU 11 executes a program stored in storer 12 and controls host processor 10 in its entirety. CPU 11 may be referred to as a controller.

Storer 12 stores the program that is executed by CPU 11. Further, storer 12 stores data for CPU 11 to perform calculation processing, data for CPU 11 to control each processor, or the like. Storer 12 may be formed of a storage apparatus such as a random access memory (RAM), a read only memory (ROM), a flash memory, or a hard disk drive (HDD).

UI 13 is, for example, a user interface such as a display, a light emitting diode (LED), a touch screen, or a button. Note that, base unit 1 may not include UI 13. In a case where base unit 1 does not include UI 13, for example, terminal 4 may function as a UI of base unit 1.

Communicator 14 communicates with PLC module 20. Communicator 14 may be, for example, an interface such as secure digital input/output (SDIO), universal asynchronous receiver/transmitter (UART), or general purpose input/output (GPIO).

PLC module 20 includes CPU 21, storer 22, Ethernet processor 23, PLC processor 24, serial communicator 25, analog front-end (AFE) processor 26, filter 27, communicator 28, and bus 29. CPU 21, storer 22, Ethernet processor 23, PLC processor 24, serial communicator 25, AFE processor 26, filter 27, and communicator 28 are connected to bus 29.

CPU 21 controls PLC module 20 in its entirety. For example, CPU 21 executes a program stored in storer 22 and controls PLC module 20 in its entirety. CPU 21 may be referred to as a controller.

Storer 22 stores the program that is executed by CPU 21. Further, storer 22 stores data for CPU 21 to perform calculation processing, data for CPU 21 to control each processor, or the like. Storer 22 may be formed of a storage apparatus such as a RAM, a ROM, a flash memory, or an HDD.

Ethernet processor 23 communicates with router 3. Ethernet processor 23 controls the physical layer and the medium access control (MAC) layer in the communication between CPU 21 and router 3.

PLC processor 24 performs PLC-based on communication with handset 2 via AFE processor 26, filter 27, and the power line, for example. PLC processor 24 controls the physical layer and the MAC layer in PLC between CPU 21 and handset 2. PLC processor 24 may be referred to as a communicator.

PLC processor 24 functions as a base unit in PLC. For example, PLC processor 24 outputs a beacon signal. PLC processor 24 receives a request for participation in the PLC network from handset 2 that has received the beacon signal, and determines whether to approve participation of handset 2 in the PLC network.

Serial communicator 25 is connected to an external network (except network 6) and performs serial communication.

AFE processor 26 converts an analogue signal in PLC outputted from filter 27 into a digital signal, and outputs the digital signal to PLC processor 24. Further, AFE processor 26 converts a digital signal in PLC outputted from PLC processor 24 into an analog signal, and outputs the analog signal to the power line via filter 27.

Filter 27 prevents power (voltage and current) in the power line from flowing into PLC module 20. Further, filter 27 passes a PLC signal, which propagates through the power line, through PLC module 20. Filter 27 may be formed of, for example, a coupler.

Communicator 28 communicates with host processor 10. Communicator 28 may be, for example, a communication interface such as SDIO, UART, or GPIO.

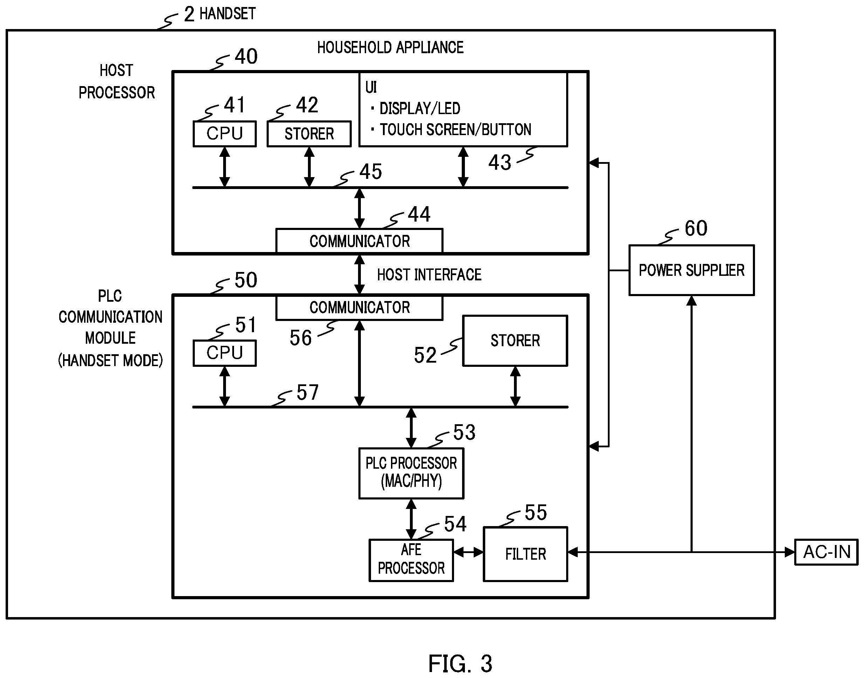

FIG. 3 illustrates a block configuration example of handset 2. As illustrated in FIG. 3, handset 2 includes host processor 40, PLC module 50, and power supplier 60.

Host processor 40 controls handset 2 in its entirety. PLC module 50 controls PLC. PLC module 20 has the function as a handset. Power supplier 60 includes an AC-DC power supply and a DC-DC power supply and supplies power obtained from the power line to host processor 40 and PLC module 50 via the AC-DC power supply and the DC-DC power supply.

Host processor 40 includes CPU 41, storer 42, UI 43, communicator 44, and bus 45. CPU 41, storer 42, UI 43, and communicator 44 are connected to bus 45.

CPU 41 controls host processor 40 in its entirety. For example, CPU 41 executes a program stored in storer 42 and controls host processor 40 in its entirety. CPU 41 may be referred to as a controller.

Storer 42 stores the program that is executed by CPU 41. Further, storer 42 stores data for CPU 41 to perform calculation processing, data for CPU 41 to control each processor, or the like. Storer 42 may be formed of a storage apparatus such as a RAM, a ROM, a flash memory, or an HDD.

UI 43 is, for example, a user interface such as a display, an LED, a touch screen, or a button. Note that, handset 2 may not include UI 43, for example, depending on the function or type of handset 2. For example, in a case where handset 2 is a household appliance such as a microwave oven, handset 2 may include UI 43. In a case where handset 2 is a household appliance such as a refrigerator, handset 2 may not include UI 43.

Communicator 44 communicates with PLC module 50. Communicator 44 may be, for example, an interface such as SDIO, UART, or GPIO.

PLC module 50 includes CPU 51, storer 52, PLC processor 53, AFE processor 54, filter 55, communicator 56, and bus 57. CPU 51, storer 52, PLC processor 53, AFE processor 54, filter 55, and communicator 56 are connected to bus 57.

CPU 51 controls PLC module 50 in its entirety. For example, CPU 51 executes a program stored in storer 52 and controls PLC module 50 in its entirety. CPU 51 may be referred to as a controller.

Storer 52 stores the program that is executed by CPU 51. Further, storer 52 stores data for CPU 51 to perform calculation processing, data for CPU 51 to control each processor, or the like. Storer 52 may be formed of a storage apparatus such as a RAM, a ROM, a flash memory, or an HDD.

PLC processor 53 performs PLC-based communication with base unit 1 via AFE processor 54, filter 55, and the power line, for example. PLC processor 53 controls the physical layer and the MAC layer in PLC between CPU 51 and base unit 1. PLC processor 53 may be referred to as a communicator.

PLC processor 53 functions as a handset in PLC. For example, PLC processor 53 receives a beacon signal flowing through the power line. In a case where PLC processor 53 has received a beacon signal, PLC processor 53 transmits a request for participation in the PLC network to base unit 1 that has transmitted the beacon signal. In a case where PLC processor 53 has received approval for participation in the PLC network from base unit 1, PLC processor 53 performs PLC.

AFE processor 54 converts an analogue signal in PLC outputted from filter 55 into a digital signal, and outputs the digital signal to PLC processor 53. Further, AFE processor 54 converts a digital signal in PLC outputted from PLC processor 53 into an analog signal, and outputs the analog signal to the power line via filter 55.

Filter 55 prevents power (voltage and current) in the power line from flowing into PLC module 50. Further, filter 55 passes a PLC signal, which propagates through the power line, through PLC module 50. Filter 55 may be formed of, for example, a coupler.

Communicator 56 communicates with host processor 40. Communicator 56 may be, for example, a communication interface such as SDIO, UART, or GPIO.

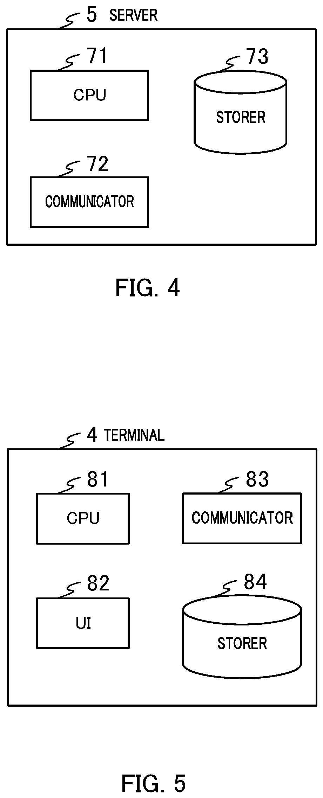

FIG. 4 illustrates a block configuration example of server 5. As illustrated in FIG. 4, server 5 includes CPU 71, communicator 72, and storer 73.

CPU 71 controls server 5 in its entirety. For example, CPU 71 executes a program stored in storer 73 and controls server 5 in its entirety. CPU 71 may be referred to as a controller.

Communicator 72 communicates with base unit 1 via network 6 and router 3. Further, communicator 72 communicates with handset 2 via network 6, router 3, and base unit 1. Further, communicator 72 communicates with terminal 4 via network 6.

Storer 73 stores the program that is executed by CPU 71. Further, storer 73 stores data for CPU 71 to perform calculation processing, data for CPU 71 to control each processor, or the like. Further, storer 73 stores information on base unit 1, handset 2 and the user. Storer 73 may be formed of a storage apparatus such as a RAM, a ROM, a flash memory, or an HDD.

FIG. 5 illustrates a block configuration example of terminal 4. As illustrated in FIG. 5, terminal 4 includes CPU 81, UI 82, communicator 83, and storer 84.

CPU 81 controls terminal 4 in its entirety. For example, CPU 81 executes a program stored in storer 84 and controls terminal 4 in its entirety. CPU 81 may be referred to as a controller.

UI 82 is, for example, a user interface such as a display, an LED, a touch screen, or a button.

Communicator 83 communicates with server 5 via network 6. Communicator 83 communicates with base unit 1 via server 5, network 6, and router 3. Communicator 83 communicates with handset 2 via router 3 and base unit 1.

Storer 84 stores the program that is executed by CPU 81. Further, storer 84 stores data for CPU 81 to perform calculation processing, data for CPU 81 to control each processor, or the like. Storer 84 may be formed of a storage apparatus such as a RAM, a ROM, a flash memory, or an HDD.

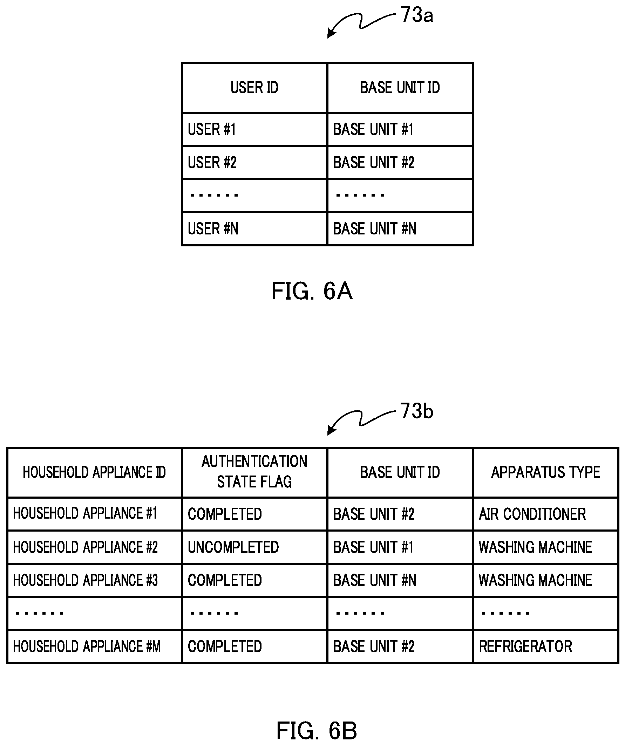

FIGS. 6A and 6B illustrate examples of tables stored in storer 73 of server 5. As illustrated in FIG. 6A, base unit management table 73a stores user IDs and base unit IDs in which a user ID is tied to a base unit ID.

The user ID is information for uniquely identifying the user of base unit 1. The user ID may be, for example, user information such as account information on a social networking service (SNS), in which the user is registered, or account information of a manufacturer site service of base unit 1. The user information may include, for example, information for calling terminal 4 of the user, such as an email address or push ID of terminal 4.

The base unit ID is information for uniquely identifying base unit 1. The base unit ID may be, for example, base unit information such as a MAC address of base unit 1 or a hash value generated from the MAC address.

As will be described later, a user ID and a base unit ID in base unit management table 73a are stored in base unit management table 73a, for example, in a case where the user performs a procedure of registering base unit 1 in server 5.

As illustrated in FIG. 6B, handset management table 73b stores household appliance IDs, authentication state flags, base unit IDs, and apparatus types.

The household appliance ID is information for uniquely identifying a household appliance (handset 2). The household appliance ID may be, for example, household appliance information (handset information) such as a MAC address of a household appliance or a hash value generated from the MAC address.

As will be described later, the authentication state flag is information indicating whether authentication of a procedure of registering a household appliance (handset 2) by the user has been completed. In a case where the use has authenticated a procedure of registering a household appliance, the authentication state flag is "completed". In a case where the use has not authenticated a procedure of registering a household appliance (in a case where the user has denied the procedure of registering the household appliance), the authentication state flag is "uncompleted".

The base unit ID is information for uniquely identifying base unit 1. The base unit ID may be, for example, information such as a MAC address of base unit 1 or a hash value generated from the MAC address.

The apparatus type indicates the type of a household appliance. For example, the apparatus type indicates the type of an apparatus, such as air conditioner, washing machine, or refrigerator.

As will be described later, a household appliance ID, an authentication state flag, a base unit ID, and an apparatus type in handset management table 73b are stored in handset management table 73b, for example, in a case where the user performs a procedure of registering a household appliance in server 5.

An operation example of the apparatus information registration system in FIG. 1 will be described. The operation of the apparatus information registration system may be divided into, for example, two operations. For example, the operation of the apparatus information registration system may be divided into an operation to register base unit 1 and an operation to register handset 2.

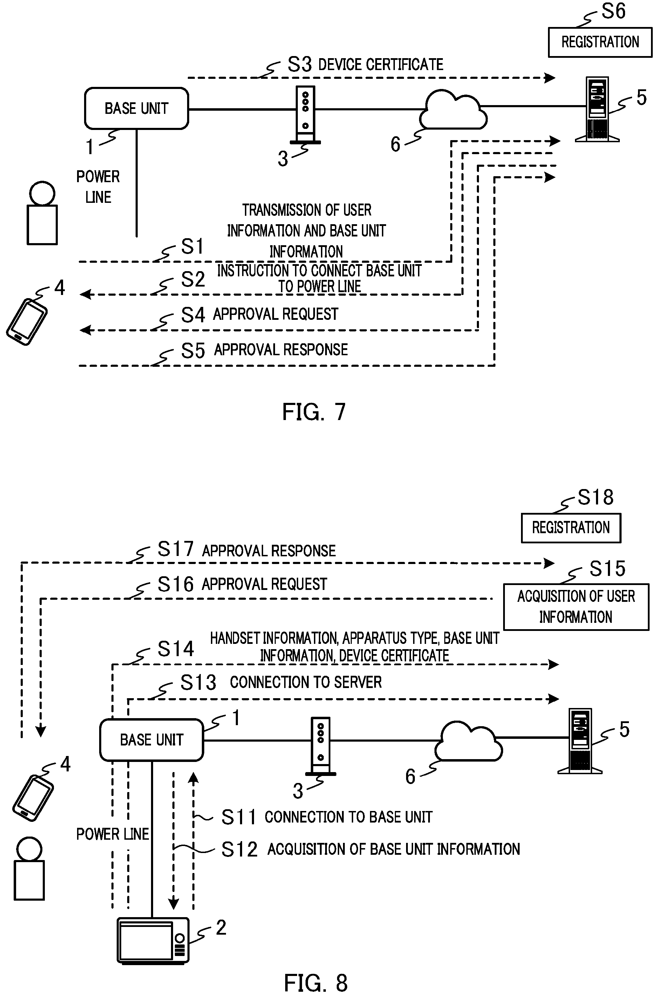

FIG. 7 is a diagram provided for describing exemplary operations to register base unit 1 of the apparatus information registration system. FIG. 7 illustrates base unit 1, router 3, terminal 4, server 5, and network 6 that are illustrated FIG. 1.

The processing of registering base unit 1 may be executed, for example, as an initial configuration for base unit 1 after the purchase of base unit 1. Alternatively, the processing of registering base unit 1 may be executed, for example, in a case where the registration of base unit 1 in server 5 has not been completed.

The user inputs user information and information on base unit 1 into terminal 4. For example, the user inputs user information such as account information on an SNS, in which the user is registered, or account information on a manufacturer site service of base unit 1, and base unit information such as a MAC address of base unit 1 or a hash value generated from the MAC address into terminal 4.

Terminal 4 transmits the inputted user information and base unit information to server 5 via network 6 (S1).

When server 5 receives the user information and base unit information from terminal 4, server 5 causes UI 82 (display) of terminal 4 to display an instruction screen instructing that base unit 1 be connected to server 5 (S2).

The user causes base unit 1 to be connected to server 5 in accordance with the instruction screen displayed on the display of terminal 4. When base unit 1 has been connected to server 5, base unit 1 transmits the device certificate of base unit 1 to server 5 (S3).

In a case where the device certificate of base unit 1 received from base unit 1 is appropriate (valid), server 5 transmits, based on the user information transmitted in S1, an approval request for registering base unit 1 to terminal 4 (S4). The approval request may be referred to as asking approval. The approval may be referred to as consent.

When terminal 4 has accepted an approval operation for approving registration of base unit 1 from the user, terminal 4 transmits an approval response to server 5 (S5).

When server 5 receives the approval response from terminal 4, server 5 stores (registers) the user information and base unit information, which have been transmitted in S1, in base unit management table 73a (S6). For example, server 5 stores the user information and base unit information in base unit management table 73a as illustrated in FIG. 6A.

The information on base unit 1 is registered in server 5 by the operations described above.

Note that, the registration of base unit 1 in server 5 is not limited to the method described above. For example, base unit 1 accepts user information from the user via UI 13. Then base unit 1 may transmit the user information accepted from the user and the base unit information on base unit 1 to server 5.

FIG. 8 is a diagram provided for describing exemplary operations to register handset 2 of the apparatus information registration system. FIG. 8 illustrates base unit 1, handset 2, router 3, terminal 4, server 5, and network 6 that are illustrated in FIG. 1. It is assumed in FIG. 8 that the registration of base unit 1 has been completed.

The processing of registering handset 2 may be executed, for example, as an initial configuration for handset 2 after the purchase of handset 2. Alternatively, the processing of registering handset 2 may be executed, for example, in a case where the registration of handset 2 in server 5 has not been completed.

When the power supply of handset 2 is turned on by the user, handset 2 is connected to base unit 1 via the power line based on PLC (S11).

When handset 2 has been connected to base unit 1, handset 2 acquires the base unit information on base unit 1 from base unit 1 (S12).

When handset 2 has acquired the base unit information on base unit 1, handset 2 is connected to server 5 via base unit 1 and router 3 (S13). In other words, when handset 2 has acquired the base unit information on base unit 1, handset 2 is connected to server 5 via the PLC network and network 6.

Note that, storer 42 or 52 of handset 2 may store the uniform resource locator (URL) of server 5 at the time of shipment or the like, for example. When handset 2 has acquired the base unit information on base unit 1, handset 2 may be connected to server 5 via the PLC network and network 6 based on the URL of server 5 stored in storer 42 or 52.

When handset 2 has been connected to server 5, handset 2 transmits handset information such as a MAC address of handset 2 or a hash value generated from the MAC address, the apparatus type of handset 2, the base unit information on base unit 1 acquired in S12, and the device certificate of handset 2 to server 5 (S14).

In a case where the device certificate received from handset 2 is appropriate, server 5 refers to base unit management table 73a based on the base unit information on base unit 1 transmitted from handset 2 in S14, and acquires user information (account information) on the corresponding user (S15).

Server 5 transmits an approval request for handset 2 to terminal 4 tied to the account information acquired in S15 (S16). Note that, the approval request may be notified, for example, by mail or by using a push ID. The approval request may include information such as the URL of server 5 that is the source of the approval request (the destination to which a response to the approval request is returned).

The user performs an approval operation on terminal 4 in accordance with the approval request displayed on the display of terminal 4.

When terminal 4 has accepted the approval operation from the user, terminal 4 transmits a response to the approval request to server 5 (S17).

In a case where server 5 receives approval from terminal 4, server 5 ties the handset information received from terminal 4 in S14 to the base unit information and stores (registers) the handset information tied to the base unit information in handset management table 73b (S18). Further, server 5 configures the authentication state flag in handset management table 73b as completed. Note that, in a case where server 5 has not received approval from terminal 4, server 5 configures the authentication state flag in handset management table 73b as uncompleted or does not perform registration of the handset information itself.

The information on handset 2 is registered in server 5 by the operations described above.

When the power supply of handset 2 is turned on by the user in the exemplary operations of FIG. 8, handset 2 may be connected to base unit 1 automatically (without any operation of the user) based on PLC (S11), and may acquire the base unit information (S12). Then handset 2 may execute the processing in S13 and S14 automatically.

In this case, as operations to register handset 2 in server 5, the user may only turn on the power supply of handset 2 and perform an approval operation for an approval request, which is transmitted from server 5, on terminal 4. Even in a case where a new handset (another handset) is connected to the PLC network, the user may only turn on the power supply of the handset and perform an approval operation for an approval request, which is transmitted from server 5, on terminal 4.

That is, the apparatus information registration system illustrated in FIG. 1 requires operations to register base unit 1, but for the operations to register handset 2, the power supply of handset 2 may be turned on and an approval operation may be performed for an approval request transmitted from server 5 to terminal 4. In other words, the apparatus information registration system illustrated in FIG. 1 makes it possible to register handset 2 in server 5 easily without performing a pairing operation between handset 2 and terminal 4 each time the user adds new handset 2 to the PLC network, for example.

As described above, the apparatus information registration system includes: base unit 1 (first apparatus) that is connected to the power line and network 6; handset 2 (second apparatus) that is connected to the power line and performs PLC with base unit 1; and server 5 that stores the base unit information on base unit 1 in association with the user information on base unit 1 in base unit management table 73a and communicates with base unit 1 via network 6. For example, when the power supply of handset 2 is turned on, handset 2 acquires the base unit information from base unit 1 based on PLC, and transmits the acquired base unit information and the handset information on handset 2 to server 5 via base unit 1. Server 5 refers to base unit management table 73a, acquires user information corresponding to the base unit information transmitted from handset 2, and transmits, to terminal 4 tied to the user information, an approval request requesting approval for registration of the apparatus information on handset 2. In a case where server 5 receives an approval response approving registration of the handset information on handset 2 from terminal 4, server 5 registers the handset information on handset 2 in handset management table 73b.

Thus, the user can easily cause the handset information on handset 2 to be registered in server 5. For example, handset 2 is connected to base unit 1 based on PLC and acquires the base unit information. Then handset 2 transmits the acquired base unit information to server 5. When server 5 has obtained registration approval from handset 2, server 5 registers the handset information transmitted from handset 2. That is, since handset 2 acquires the base unit information from base unit 1 based on PLC and transmits the base unit information to server 5, the user is not required to cause handset 2 to be connected to network 6 by pairing handset 2 with terminal 4 and can easily cause the handset information on handset 2 to be registered in server 5.

Note that, in a case where handset 2 includes UI 43 such as a display and a touch screen, server 5 may transmit an approval request to handset 2 via base unit 1. Handset 2 may display the approval request received from server 5 on UI 43 and may accept an approval operation from the user. In a case where server 5 receives an approval response to the approval request from handset 2, server 5 may register the handset information on handset 2.

### (Embodiment 2)

For example, in multiple dwelling houses such as a condominium, a signal of a PLC apparatus disposed within each house may leak via the distribution boards and the switchboard of the multiple dwelling houses. In this case, for example, in the connection processing in S11 of FIG. 8, handset 2 at one house may be erroneously connected to base unit 1 at another house. In Embodiment 2, an operation to suppress erroneous connection of handset 2 to base unit 1 will be described. Hereinafter, a description will be given of portions that differ from those in Embodiment 1.

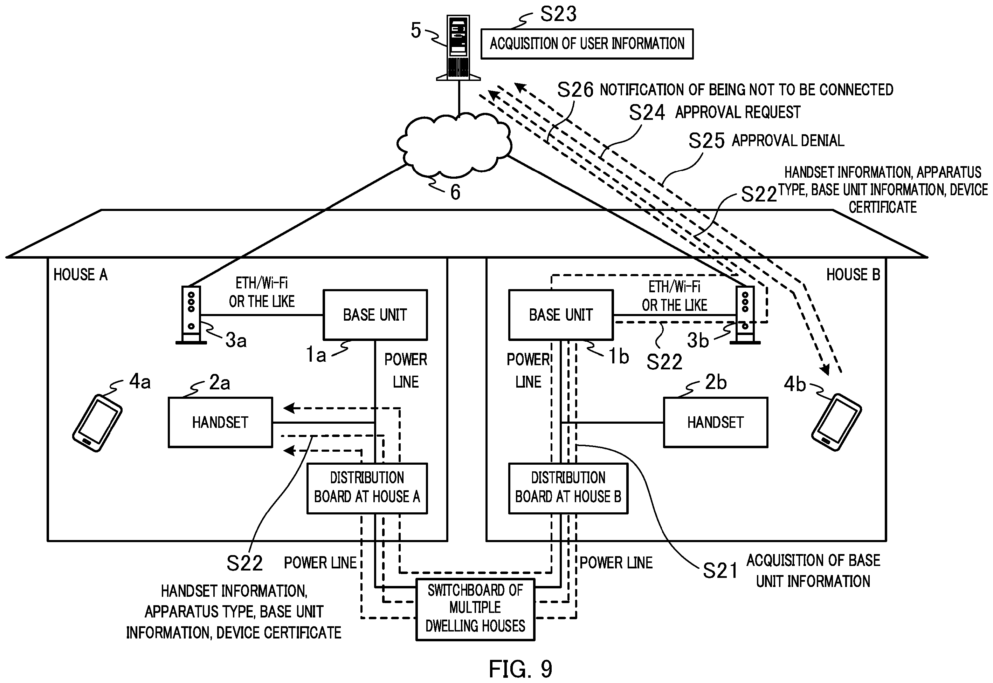

FIG. 9 illustrates a configuration example of an apparatus information registration system according to Embodiment 2. FIG. 9 illustrates multiple dwelling houses including houses A and B. The power line at house A is connected to the distribution board at house A and is connected to the switchboard of the multiple dwelling houses. The power line at house B is connected to the distribution board at house B and is connected to the switchboard of the multiple dwelling houses.

House A includes base unit 1a, handset 2a, router 3a, and terminal 4a. It is assumed that registration of base unit 1a at house A in server 5 has been completed.

House B includes base unit 1b, handset 2b, router 3b, and terminal 4b. It is assumed that registration of base unit 1b at house B in server 5 has been completed.

A schematic operation example of the apparatus information registration system in FIG. 9 will be described. In FIG. 9, the user at house A causes handset 2a to be connected to the power line at house A and turns on the power supply of handset 2a. In this case, for example, handset 2a at house A may receive a beacon signal of base unit 1b at house B via the distribution board at house A, the switchboard of the multiple dwelling houses, and the distribution board at house B.

In a case where handset 2a at house A has received a beacon signal of base unit 1b at house B, handset 2a at house A is connected to base unit 1b at house B and acquires the base unit information on base unit 1b (S21). Handset 2a at house A is connected to server 5 and transmits the handset information on handset 2a, the apparatus type of handset 2a, the base unit information on base unit 1b at house B, and the device certificate of handset 2a to server 5 (S22).

In a case where the device certificate received from handset 2a at house A is appropriate, server 5 refers to base unit management table 73a based on the base unit information on base unit 1b transmitted from handset 2a, and acquires user information (account information) on the corresponding user (S23).

Note that, as described above, registration of base unit 1b at house B in server 5 has been completed. Accordingly, server 5 acquires the account information of the user at house B based on the base unit information on base unit 1b at house B transmitted in S22.

Server 5 transmits an approval request for handset 2a at house A to terminal 4b at house B based on the account information acquired in S23 (S24).

However, since the user at house B has not performed an operation to register handset 2b at house B, the user at house B determines that the approval request is not an approval request for the user at house B and denies the approval request transmitted from server 5. Terminal 4b transmits a denial (information) of the approval request to server 5 in accordance with the operation of the user (S25).

In a case where server 5 receives the denial of the approval request from terminal 4b, server 5 does not register the handset information on handset 2a at house A. That is, server 5 does not store the handset information on handset 2a at house A in handset management table 73b.

Thus, it is possible to suppress erroneous registration of handset 2a in server 5. That is, the transmission of an approval request to terminal 4b at house B by server 5 makes it possible to suppress erroneous registration to handset 2a at house A in server 5.

In a case where server 5 receives the denial from terminal 4b, server 5 notifies handset 2a, which has transmitted various data in S22, that base unit 1b of the base unit information having been transmitted by handset 2a is a base unit not to be connected to handset 2a (S26).

In a case where handset 2a has received not-to-be-connected information (information indicating that base unit 1b is not to be connected) from server 5, handset 2a ignores a beacon signal of base unit 1b not to be connected. Thus, handset 2a ignores the beacon signal of base unit 1b and erroneous connection to base unit 1b is suppressed.

Note that, when server 5 transmits the approval request in S24 to terminal 4b, server 5 may transmit information on the apparatus type of handset 2a that is registered. For example, in a case where handset 2a is a microwave oven, server 5 may transmit information indicating the apparatus type "microwave oven" to terminal 4b.

Specifically, it is assumed that when an operation to register handset 2a is performed at house A, an operation to register a refrigerator is also performed at house B. In this case, the user at house B, who performs the operation to register the refrigerator, can deny approving an approval request for the microwave oven (that is, handset 2a at house A). Then the user at house B can approve an approval request for the refrigerator (that is, handset 2b at house B).

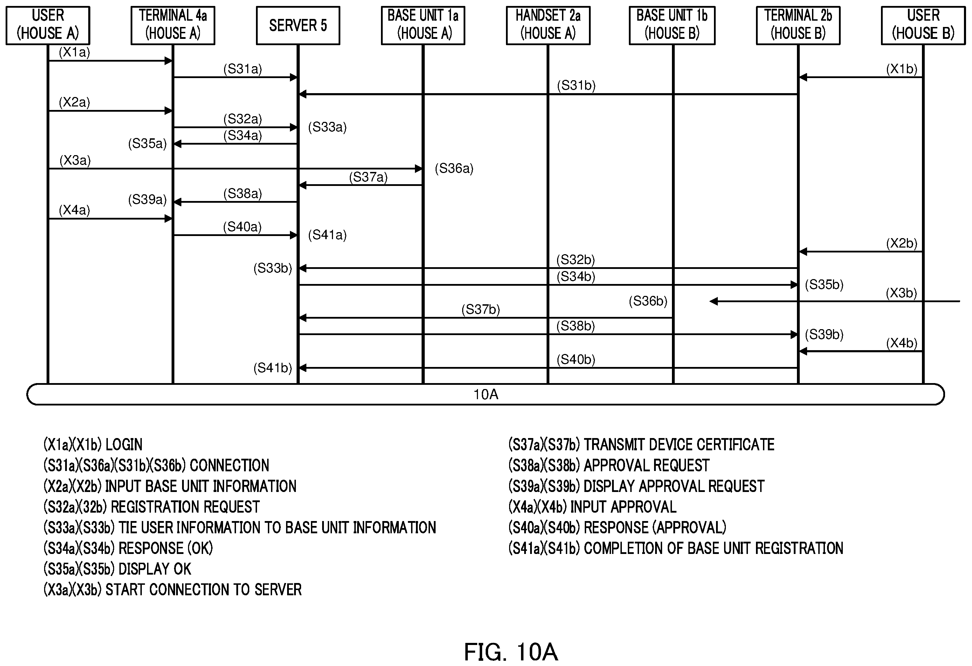

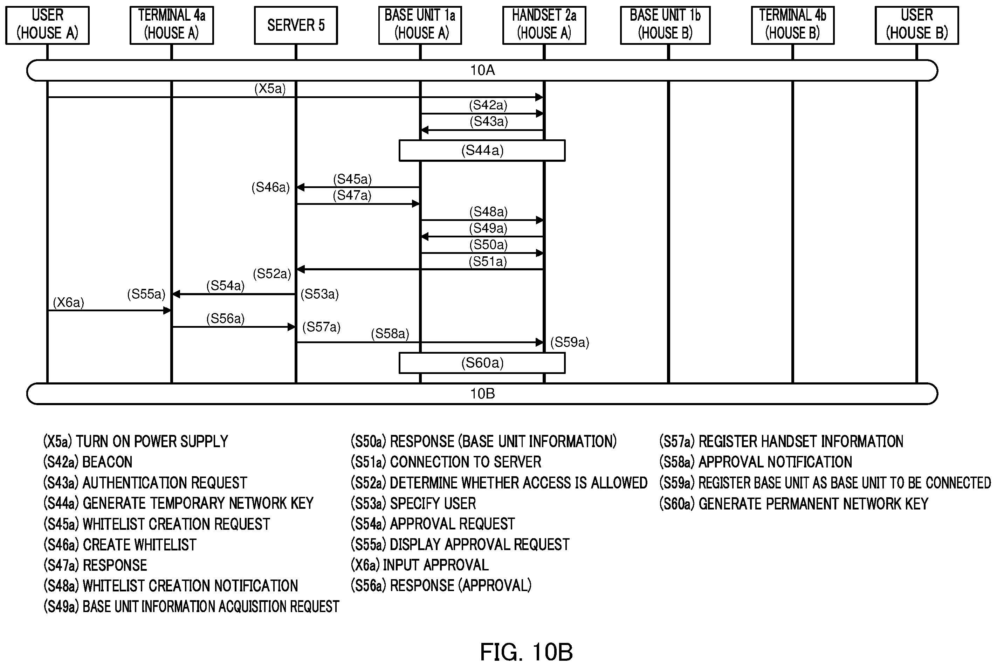

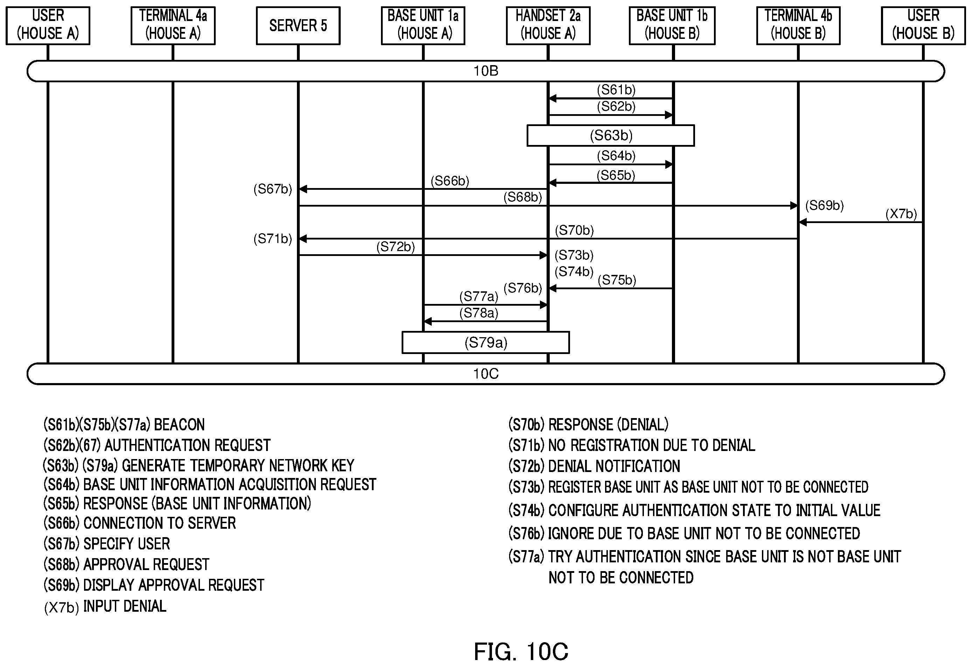

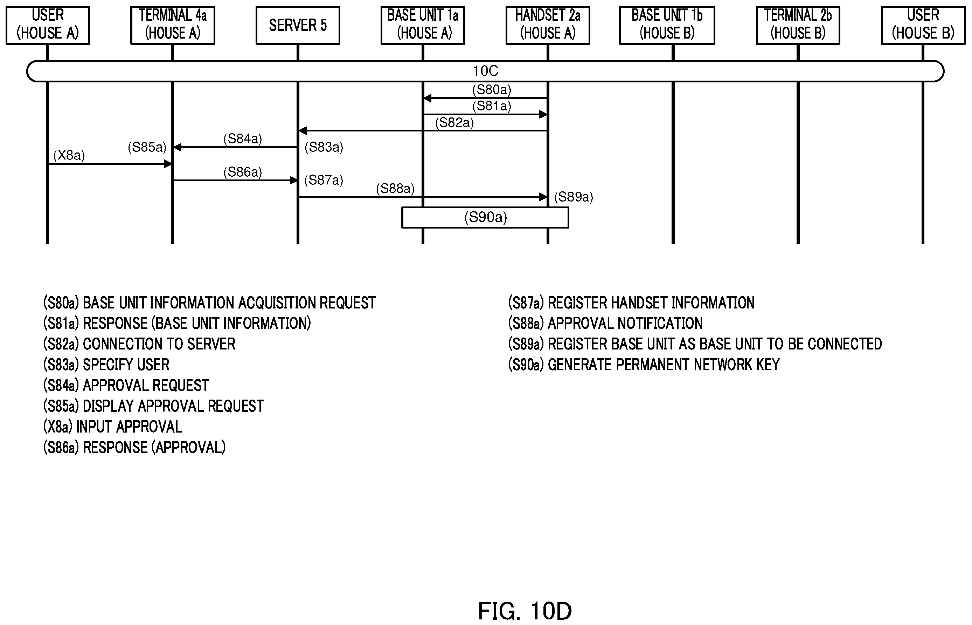

FIGS. 10A to 10D are sequence diagrams illustrating exemplary operations in the apparatus information registration system in FIG. 9. "10A" illustrated in FIG. 10A is connected to "10A" illustrated in FIG. 10B. "10B" illustrated in FIG. 10B is connected to "10B" illustrated in FIG. 10C. "10C" illustrated in FIG. 10C is connected to "10C" illustrated in FIG. 10D.

The sequence illustrated in FIG. 10A indicates exemplary operations to register base unit information. The sequence illustrated in FIG. 10A may be performed once, for example, in the initial configurations of base units 1a and 1b.

The user at house A performs a login operation on terminal 4a (X1a). For example, the user at house A logs in at a predetermined application or service site.

Terminal 4a is connected to server 5 in accordance with the login operation in X1a (S31a).

The user at house A inputs the base unit information on base unit 1a into terminal 4a (X2a).

Terminal 4a transmits a registration request to server 5 in accordance with the input of the base unit information on base unit 1a (S32a).

Server 5 ties the base unit information to the user information on the user at house A (S33a).

When server 5 has tied the base unit information to the user information on the user at house A, server 5 transmits, to terminal 4a, a response indicating that server 5 has accepted the registration request (S34a).

When terminal 4a has received the response in S34a, server 5 causes a display of terminal 4a to display that the registration request has been accepted (for example, to display OK) (S35a).

When the user at house A has confirmed the OK displayed on the display of terminal 4a, the user at house A performs a connection operation of base unit 1a to server 5 (X3a).

Base unit 1a is connected to server 5 in accordance with the connection operation to server 5 (S36a).

When base unit 1a has been connected to server 5, base unit 1a transmits the device certificate of base unit 1a to server 5 (S37a).

In a case where the device certificate of base unit 1a is appropriate, server 5 transmits an approval request to terminal 4a (S38a).

Terminal 4a causes the display thereof to display the approval request in accordance with the reception of the approval request in S38a (S39a).

When the user at house A has confirmed the approval request displayed on the display of terminal 4a, the user at house A performs an approval input operation on terminal 4a (X4a).

Terminal 4a transmits an approval response to server 5 in accordance with the approval input operation (S40a).

Server 5 stores the information, which has been tied in S33a, in storer 73 in accordance with the approval response in S40a, and completes the base unit registration processing (S41a). Thus, storer 73 stores, for example, base unit management table 73a that has been described in FIG. 6A.

X1b to X4b and S31b to 41b illustrated in FIG. 10A indicate exemplary operations to register base unit information at house B. X1b to X4b are the same as the operations X1a to X4a of the user at house A, and descriptions thereof will be omitted. S31b to S41b are the same as the exemplary registration operations S31a to S41a of the base unit information at house A, and descriptions thereof will be omitted.

The sequence in FIG. 10B will be described. FIG. 10B illustrates exemplary operations in a case where handset 2a at house A receives a beacon signal of base unit 1a at house A (a beacon signal of the appropriate base unit).

The user at house A turn on the power supply of handset 2a (X5a).

Base unit 1a at house A transmits a beacon signal to the power line (S42a). Note that, base unit 1a transmits beacon signals at a predetermined period.

Handset 2a that has received the beacon signal transmits an authentication request to base unit 1a (S43a).

Base unit 1a and handset 2a generate a temporary network key (S44a). The network key is a key for encrypting communication between base unit 1a and handset 2a.

Base unit 1a requests server 5 to create a whitelist (S45a).

Note that, the whitelist is a list in which server 5 holds handset information on a handset(s) that may be connected to server 5 (that may be connected to a cloud). Base unit 1a notifies server 5 of the handset information on handset 2a.

For example, base unit 1a notifies server 5 of the handset information on handset 2a at a timing when handset 2a is authenticated at a PLC level. The handset information on handset 2a is, for example, information for identifying handset 2a and may be a MAC address. Server 5 ties the base unit information on base unit 1a to the handset information on handset 2a and holds the tied pieces of information in a whitelist.

FIG. 10B will be described again. Server 5 creates a whitelist in accordance with the whitelist creation request (S46a).

Server 5 transmits a response to the whitelist creation request to base unit 1a (S47a).

When base unit 1a has received the response to the whitelist creation request from server 5, base unit 1a transmits a whitelist creation notification to handset 2a (S48a).

In a case where handset 2a has received the whitelist creation notification from base unit 1a, handset 2a performs a base unit information acquisition request on base unit 1a (S49a).

Base unit 1a transmits the base unit information on base unit 1a to handset 2a in accordance with the base unit information acquisition request in S49a (S50a).

When handset 2a has received the base unit information on base unit 1a from base unit 1a, handset 2a is connected to server 5 via base unit 1a (S51a). Handset 2a transmits the base unit information acquired from base unit 1a, the handset information on handset 2a, the apparatus type of handset 2a, and the device certificate of handset 2a to server 5.

Server 5 determines based on the device certificate transmitted in S51a whether handset 2a is allowed to access (S52a).

In a case where server 5 has determined that handset 2a is allowed to access, server 5 refers to base unit management table 73a of storer 73 and acquires user information corresponding to the base unit information transmitted in S51a (specifies terminal 4a in house A) (S53a).

Server 5 transmits an approval request for handset 2a to terminal 4a specified in S53a (S54a).

Terminal 4a causes the display thereof to display the approval request for registration of handset 2a in accordance with the reception of the approval request in S54a (S55a).

When the user at house A has confirmed the approval request displayed on the display of terminal 4a, the user at house A performs an approval input operation (an operation to approve registration of handset 2) on terminal 4a (X6a).

Terminal 4a transmits an approval response to server 5 in accordance with the approval input operation (S56a).

Server 5 stores (registers) the handset information, which has been transmitted in the server connection in S51a, in storer 73 in accordance with the approval response in S56a (S57a). Storer 73 stores, for example, handset management table 73b that has been described in FIG. 6B.

When server 5 has registered the handset information on handset 2a, server 5 performs an approval notification to handset 2a (S58a).

When handset 2a has received the approval notification from server 5, handset 2a registers base unit 1a, which has transmitted the beacon signal, as a base unit to be connected in PLC (S59a).

When handset 2a has registered the base unit to be connected in PLC, base unit 1a and handset 2a generate a permanent network key (S60a).

The sequence in FIG. 10C will be described. FIG. 10C illustrates exemplary operations in a case where handset 2a at house A receives a beacon signal of base unit 1b at house B (a beacon signal of an inappropriate base unit). Hereinafter, it is assumed that the handset information on handset 2a has not been registered in server 5. Further, hereinafter, a description of the transmission and reception of the device certificate of handset 2a will be omitted.

Base unit 1b at house B transmits a beacon signal to the power line (S61b). Note that, base unit 1b transmits beacon signals at a predetermined period.

Handset 2a that has received the beacon signal transmits an authentication request to base unit 1b at house B (S62b).

Base unit 1b and handset 2a generate a temporary network key (S63b).

When the temporary network key has been generated, handset 2a performs a base unit information acquisition request on base unit 1b at house B (S64b).

Base unit 1b at house B transmits the base unit information on base unit 1b to handset 2a in accordance with the base unit information acquisition request in S64b (S65b).

When handset 2a has received the base unit information on base unit 1b from base unit 1b at house B, handset 2a is connected to server 5 (S66b). Handset 2a transmits the base unit information acquired from base unit 1b at house B, the handset information on handset 2a, the apparatus type of handset 2a, and the device certificate of handset 2a to server 5.

Server 5 refers to base unit management table 73a of storer 73 and acquires user information corresponding to the base unit information (base unit 1b at house B) transmitted in S66b (specifies terminal 4b at house B) (S67b).

Server 5 transmits an approval request for handset 2a to terminal 4b at house B specified in S67b (S68b).

Terminal 4b at house B causes the display thereof to display the approval request for registration of handset 2a in accordance with the reception of the approval request in S68b (S69b).

Since the user at house B has not performed an operation to register handset 2a, the user at house B performs a denial input operation (an operation not to approve registration of handset 2a) on terminal 4b (X7b).

Terminal 4b transmits a denial response to server 5 in accordance with the denial input operation (S70b).

In a case where server 5 receives the denial response from terminal 4b, server 5 does not perform processing of registering the handset information on handset 2a transmitted in S66b (S71b).

Server 5 performs a denial notification to handset 2a (S72b). That is, server 5 notifies handset 2a that the handset information on handset 2a has not been registered.

When handset 2a has received the denial notification from server 5, handset 2a registers base unit 1b at house B, which has transmitted the beacon signal, as a base unit not to be connected in PLC (S73b). Handset 2a configures the authentication state to an initial value (S74b).

Base unit 1b at house B transmits a beacon signal to the power line (S75b).

Since handset 2a has registered base unit 1b at house B as a base unit not to be connected in S73b, handset 2a ignores the beacon signal of base unit 1b (S76b).

Base unit 1a at house A transmits a beacon signal to the power line (S77a).

Since handset 2a has not registered base unit 1a at house A as a base unit not to be connected, handset 2a receives the beacon signal of base unit 1a and performs an authentication request to base unit 1a (S78a).

Base unit 1a and handset 2a at house A generate a temporary network key (S79a).

In FIG. 10D, when the temporary network key has been generated, handset 2a performs a base unit information acquisition request on base unit 1a at house A (S80a).

Base unit 1a transmits the base unit information on base unit 1a to handset 2a in accordance with the base unit information acquisition request in S80a (S81a).

When handset 2a has received the base unit information on base unit 1a from base unit 1a, handset 2a is connected to server 5 via base unit 1a (S82a). Handset 2a transmits the base unit information acquired from base unit 1a, the handset information on handset 2a, the apparatus type of handset 2a, and the device certificate of handset 2a to server 5.

Server 5 refers to base unit management table 73a of storer 73 and acquires user information corresponding to the base unit information transmitted in S82a (specifies terminal 4a in house A) (S83a).

Server 5 transmits an approval request for handset 2a to terminal 4a specified in S83a (S84a).

Terminal 4a causes the display thereof to display the approval request for registration of handset 2a in accordance with the reception of the approval request in S84a (S85a).

When the user at house A has confirmed the approval request displayed on the display of terminal 4a, the user at house A performs an approval input operation on terminal 4a (X8a).

Terminal 4a transmits an approval response to server 5 in accordance with the approval input operation (S86a).

Server 5 stores (registers) the handset information, which has been transmitted in the server connection in S82a, in storer 73 in accordance with the approval response in S86a (S87a). Storer 73 stores, for example, handset management table 73b that has been described in FIG. 6B.

When server 5 has registered the handset information on handset 2a, server 5 performs an approval notification to handset 2a (S88a).

When handset 2a has received the approval notification from server 5, handset 2a registers base unit 1a, which has transmitted the beacon signal, as a base unit to be connected in PLC (S89a).

When handset 2a has registered the base unit to be connected in PLC, base unit 1a and handset 2a generate a permanent network key (S90a).

As described above, in a case where server 5 does not obtain registration approval from the user of handset 2, server 5 notifies handset 2 that the base unit of the base unit information having been transmitted by handset 2 is a base unit not to be connected to handset 2. Thus, handset 2 can ignore a beacon signal transmitted from the base unit not to be connected and suppress erroneous connection to base unit 1 of the other house.

### (Embodiment 3)

In Embodiments 1 and 2, server 5 transmits an approval request to terminal 4 of the user. In Embodiment 3, base unit 1 transmits an approval request to terminal 4 of the user.

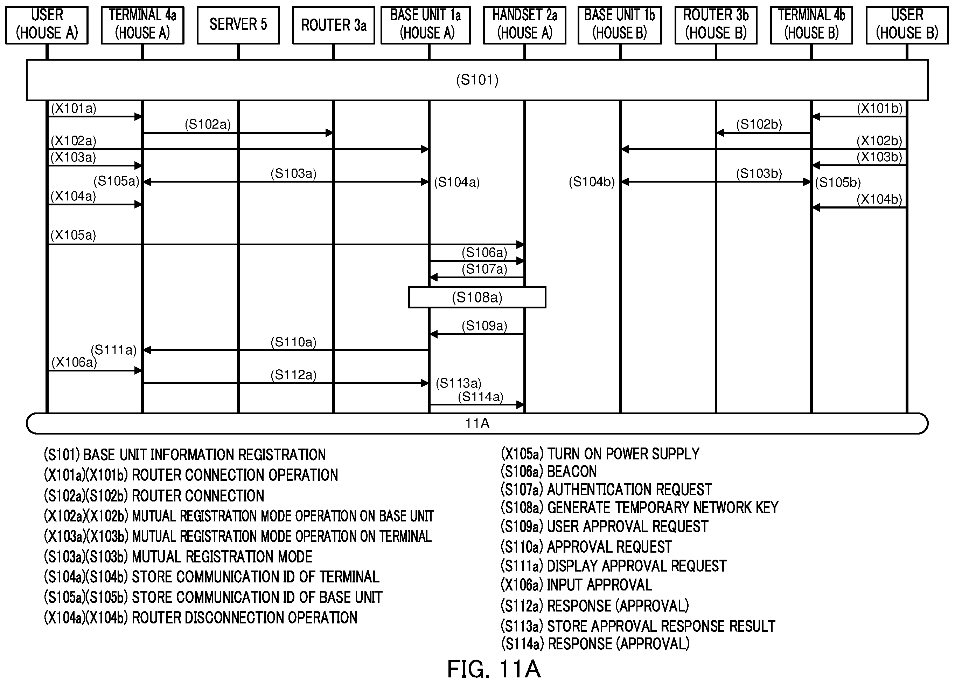

FIGS. 11A to 11C are sequence diagrams illustrating exemplary operations in an apparatus information registration system according to Embodiment 3. FIGS. 11A to 11C illustrate sequences in the respective apparatuses indicated in FIG. 9.

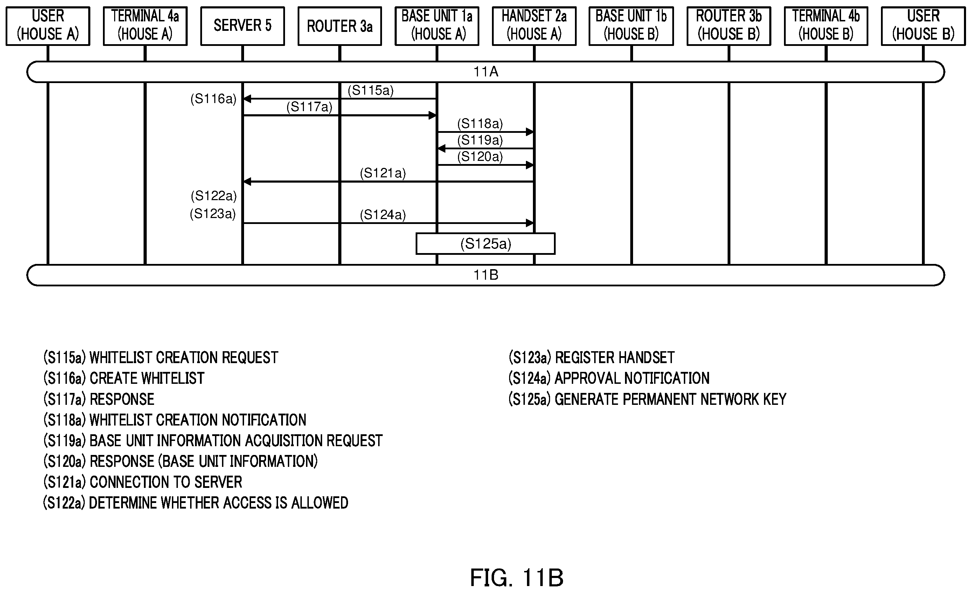

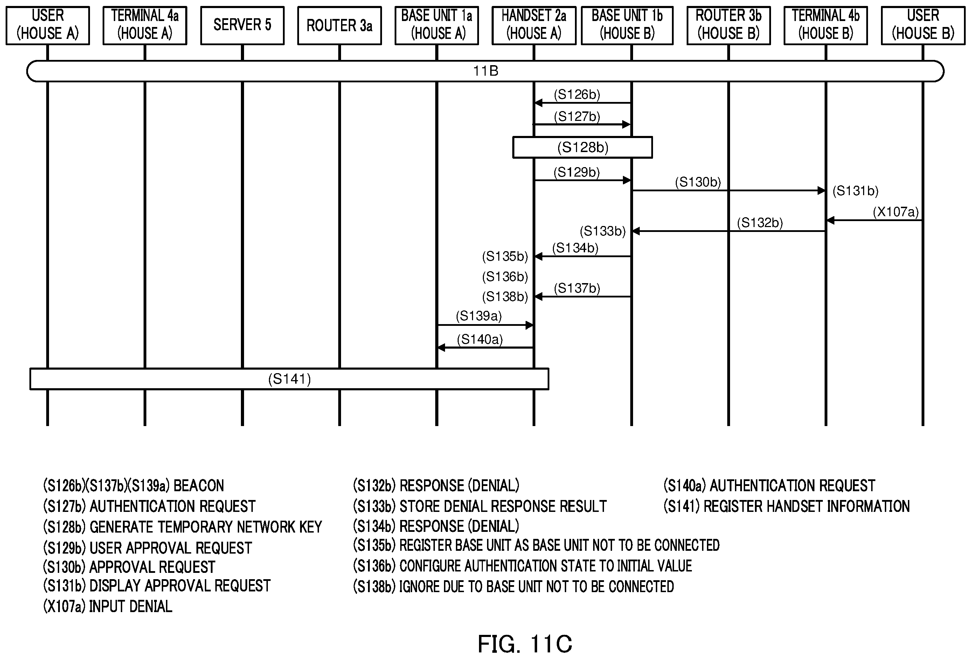

"11A" illustrated in FIG. 11Ais connected to "11A" illustrated in FIG. 11B. "11B" illustrated in FIG. 11B is connected to "11B" illustrated in FIG. 11C.

S101 illustrated in FIG. 11A indicates processing of registering the base unit information on base unit 1a and processing of registering the base unit information on base unit 1b. S101 is the same processing as X1a to X4a, X1b to X4b, and S31a to S41b described in FIG. 10A, and a description thereof will be omitted.

The user at house A operates terminal 4a and causes terminal 4a to be connected to router 3a (X101a). The connection of terminal 4a to router 3a may be, for example, Wi-fi (registered trademark) connection. In the case of Wi-fi connection, the user inputs, for example, a service set identifier (SSID) and a password into terminal 4a.

Terminal 4a is connected to router 3a in accordance with the operation of the user (S102a).

The user at house A operates base unit 1a and causes base unit 1a to be in a registration mode (X102a).

The user at house A operates terminal 4a and causes terminal 4a to be in a registration mode (X103a).

Base unit 1a and terminal 4a cause the operation mode thereof to be a mutual registration mode in accordance with the operations in X102a and X103a (S103a).

In the mutual registration mode, base unit 1a stores communication ID of terminal 4a for communicating with terminal 4a (S104a).

In the mutual registration mode, terminal 4a stores communication ID of base unit 1a for communicating with base unit 1a (S105a).

The user at house A operates terminal 4a and causes terminal 4a to be disconnected from router 3a (X104a).

X101b to X104b and S102b to 105b illustrated in FIG. 11A indicate exemplary operations in the mutual registration mode of base unit 1b and terminal 4b at house B. X101b to X104b are the same as operations X101a to X104a of the user at house A, and descriptions thereof will be omitted. S102b to S105b are the same as exemplary operations S102a to S105 in the mutual registration mode at house A, and descriptions thereof will be omitted.

The user at house A turn on the power supply of handset 2a (X105a).

Base unit 1a at house A transmits a beacon signal to the power line (S106a). Note that, base unit 1a transmits beacon signals at a predetermined period.

Handset 2a that has received the beacon signal transmits an authentication request to base unit 1a (S107a).

Base unit 1a and handset 2a generate a temporary network key (S108a).

When the temporary network key has been generated, handset 2a transmits a user approval request to base unit 1a (S109a).

Base unit 1a transmits an approval request to terminal 4a in accordance with the user approval request in S109a (S110a). Note that, the approval request to terminal 4a may be transmitted via server 5. Base unit 1a communicates with terminal 4a by using communication ID of terminal 4a and transmits the approval request to terminal 4a.

Terminal 4a causes the display thereof to display the approval request for registration of handset 2a in accordance with the reception of the approval request in S110a (S111a).

When the user at house A has confirmed the approval request displayed on the display of terminal 4a, the user at house A performs an approval input operation (an operation to approve registration of handset 2) on terminal 4a (X106a).

Terminal 4a transmits an approval response to base unit 1a in accordance with the approval input operation (S112a). Terminal 4a communicates with base unit 1a by using communication ID of base unit 1a and transmits the approval response to base unit 1a.

Base unit 1a stores a result of the approval response transmitted in S112a (S113a).

Base unit 1a performs an approval notification to handset 2a (S114a).

After base unit 1a performs the approval notification to handset 2a, base unit 1a requests server 5 to create a whitelist in FIG. 11B (S115a).

Server 5 creates a whitelist in accordance with the whitelist creation request (S116a).

Server 5 transmits a response to the whitelist creation request to base unit 1a (S117a).

When base unit 1a has received the response to the whitelist creation request from server 5, base unit 1a transmits a whitelist creation notification to handset 2a (S118a).

In a case where handset 2a has received the whitelist creation notification from base unit 1a, handset 2a performs a base unit information acquisition request on base unit 1a (S119a).

Base unit 1a transmits the base unit information on base unit 1a to handset 2a in accordance with the base unit information acquisition request in S119a (S120a).

When handset 2a has received the base unit information on base unit 1a from base unit 1a, handset 2a is connected to server 5 via base unit 1a (S121a). Handset 2a transmits the base unit information acquired from base unit 1a, the handset information on handset 2a, the apparatus type of handset 2a, and the device certificate of handset 2a to server 5. Note that, base unit 1a bridges the communication of handset 2a for which the approval has been already performed (handset 2a corresponding to the result of the approval response stored in S113a). Base unit 1a does not bridge the communication of a handset for which the approval has not been performed yet.

Server 5 determines based on the device certificate transmitted in S51a whether handset 2a is allowed to access (S122a).

In a case where server 5 has determined that handset 2a is allowed to access, server 5 stores (registers) the handset information, which has been transmitted in S121a, in storer 73 (S123a). Storer 73 stores, for example, handset management table 73b that has been described in FIG. 6B.

When server 5 has registered the handset information on handset 2a, server 5 performs a registration notification to handset 2a via base unit 1a (S124a).

When handset 2a has received the registration notification from server 5, base unit 1a and handset 2a generate a permanent network key (S125a).

The sequence in FIG. 11C will be described. FIG. 11C illustrates exemplary operations in a case where handset 2a at house A receives a beacon signal of base unit 1b at house B (a beacon signal of an inappropriate base unit). Hereinafter, it is assumed that the handset information on handset 2a has not been registered in server 5.

Base unit 1b at house B transmits a beacon signal to the power line (S126b). Note that, base unit 1b transmits beacon signals at a predetermined period.

Handset 2a that has received the beacon signal transmits an authentication request to base unit 1b at house B (S127b).

Base unit 1a and handset 2a generate a temporary network key (S128b).

When the temporary network key has been generated, handset 2a transmits a user approval request to base unit 1b at house B (S129b).

Base unit 1b at house B transmits an approval request to terminal 4b in accordance with the user approval request in S129b (S130b). Base unit 1b at house B communicates with terminal 4b by using communication ID of terminal 4b and transmits the approval request to terminal 4b.

Terminal 4b at house B causes the display thereof to display the approval request for registration of handset 2a in accordance with the reception of the approval request in S130b (S131b).

Since the user at house B has not performed an operation to register handset 2a, the user at house B performs a denial input operation (an operation not to approve registration of handset 2a) on terminal 4b (X107a).

Terminal 4b transmits a denial response to base unit 1b in accordance with the denial input operation (S132b). Terminal 4b communicates with base unit 1b by using communication ID of base unit 1b and transmits the denial response to base unit 1b.

Base unit 1b at house B stores a result of the denial response transmitted in S132b (S133b).

Base unit 1b at house B performs a denial notification to handset 2a (S134b).

When handset 2a has received the denial notification from base unit 1b at house B, handset 2a registers base unit 1b at house B, which has transmitted the beacon signal, as a base unit not to be connected in PLC (S135b). Handset 2a configures the authentication state to an initial value (S136b).

Base unit 1b at house B transmits a beacon signal to the power line (S137b).

Since handset 2a has registered base unit 1b at house B as a base unit not to be connected in S135b, handset 2a ignores the beacon signal of base unit 1b (S138b).

Base unit 1a at house A transmits a beacon signal to the power line (S139a).

Since handset 2a has not registered base unit 1a at house A as a base unit not to be connected, handset 2a receives the beacon signal of base unit 1a and transmits an authentication request to base unit 1a (S140a).

S141 indicates processing of registering the handset information on handset 2a. S141 is the same processing as S108a to S125a, and X106a described in FIGS. 11A and 11B, and a description thereof will be omitted.

As described above, the apparatus information registration system includes: base unit 1a, 1b (first apparatus) that is connected to the power line and network 6 and stores communication ID; handset 2 (second apparatus) that is connected to the power line and performs PLC with base unit 1a, 1b; and server 5 that is connected to network 6 and communicates with base unit 1a, 1b. For example, when the power supply of handset 2a, 2b is turned on, handset 2a, 2b transmits an approval request, which requests registration approval for registration of the handset information on handset 2a, 2b in server 5, to base unit 1a, 1b based on PLC. Base unit 1a, 1b transmits, in accordance with the reception of the approval request, the approval request, which requests the registration approval for registration of the handset information, to terminal 4a, 4b tied to communication ID. In a case where base unit 1a, 1b has received an approval response to the approval request from terminal 4a, 4b, base unit 1a, 1b transmits an approval response to handset 2a, 2b based on PLC. In a case where handset 2a, 2b has received the approval response from base unit 1a, 1b, handset 2a, 2b transmits the handset information to server 5 via base unit 1a, 1b, and server 5 registers the handset information.

As described above, even in a case where base unit 1a, 1b transmits an approval request to terminal 4a, 4b (the user), the user can easily cause the handset information on handset 2 to be registered in server 5.

Note that, the processing of the mutual registration mode may be omitted in the sequences in FIGS. 11A to 11C. For example, the user operations in X101a to X104a and X101b to X104b and the processing in S102a to S105a and S102b to S105b may be omitted. In this case, base unit 1a, 1b may ask approval from the user (terminal 4a, 4b) via server 5.

### (Embodiment 4)

In Embodiments 1, 2, and 3, server 5 registers the handset information on handset 2, but the present disclosure is not limited thereto. In Embodiment 4, base unit 1 registers the handset information on handset 2.

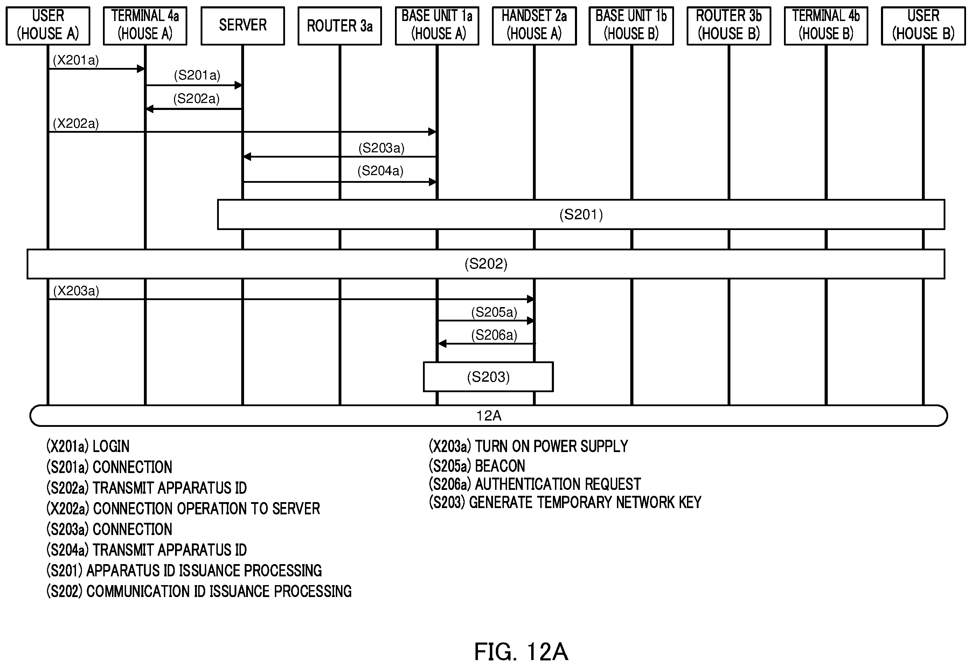

FIGS. 12A to 12C are sequence diagrams illustrating exemplary operations in an apparatus information registration system according to Embodiment 4. FIGS. 12A to 12C illustrate sequences in the respective apparatuses indicated in FIG. 9. However, the server indicated in FIGS.12A to 12C may be a server having a different function(s) from server 5 indicated in FIG. 9. For example, the server indicated in FIGS. 12A to 12C may be a server that issues apparatus ID, and may not store handset information.

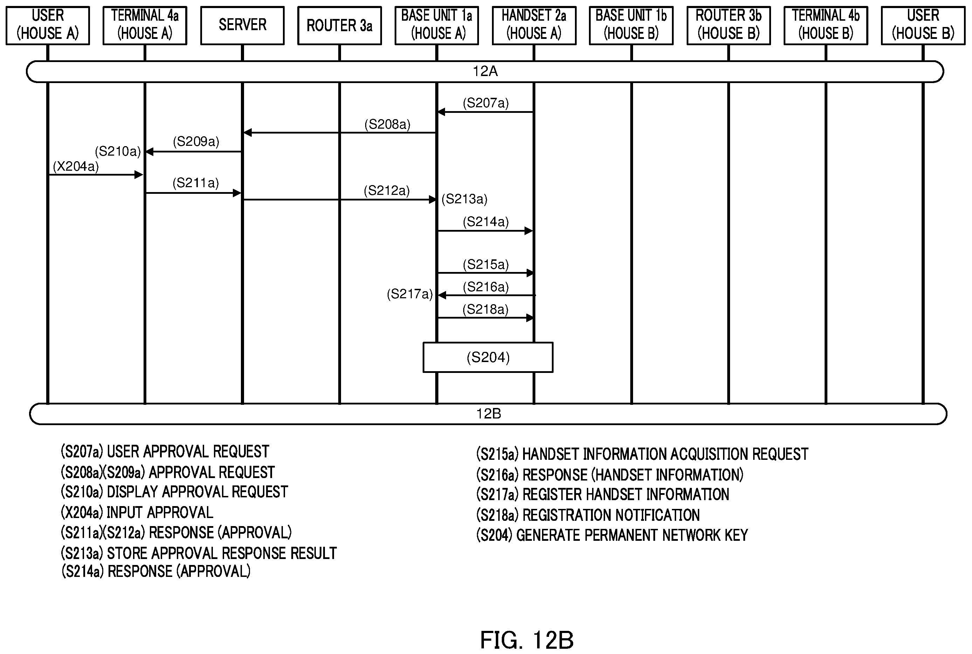

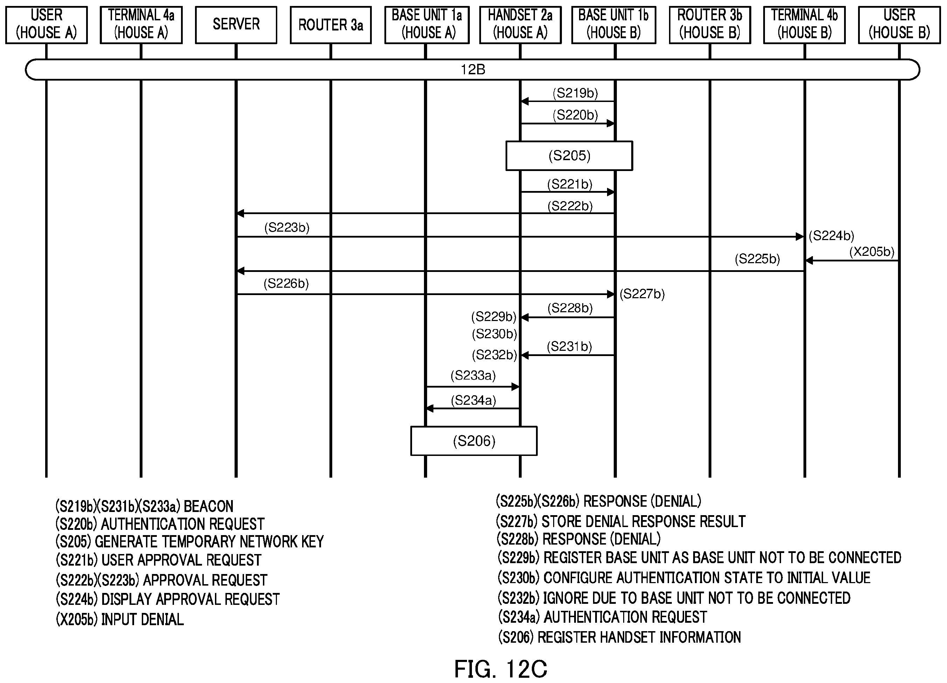

"12A" illustrated in FIG. 12A is connected to "12A" illustrated in FIG. 12B. "12B" illustrated in FIG. 12B is connected to "12B" illustrated in FIG. 12C. Hereinafter, descriptions of the processing of the whitelist creation and the device certificate will be omitted.

The user at house A performs a login operation on terminal 4a (X201a). For example, the user at house A logs in at a predetermined application or service site.

Terminal 4a is connected to a server in accordance with the login operation in X201a (S201a).

The server issues apparatus ID, which is unique, to terminal 4a and transmits the apparatus ID, which has been issued, to terminal 4a (S202a). Terminal 4a stores apparatus ID transmitted from the server.

The user at house A performs a connection operation (which may include login or the like) of base unit 1a to server 5 (X202a). For example, the user at house A logs in at a predetermined application or service site.

Base unit 1a is connected to the server in accordance with the connection operation (which may include login or the like) in X202a (S203a).

The server issues apparatus ID, which is unique, to base unit 1a and transmits the apparatus ID, which has been issued, to base unit 1a (S204a). Base unit 1a stores apparatus ID transmitted from the server.

S201 indicates apparatus ID issuance processing at base unit 1b and terminal 4b. S201 is the same processing as X201a, X202a, and S201a to S204a described above, and a description thereof will be omitted. Note that, apparatus ID may be written as apparatus-specific information in an apparatus, for example, at the time of shipment. In this case, the above processing is not necessary.

S202 indicates communication ID issuance processing at base unit 1a, 1b and terminal 4a, 4b. S202 is the same processing as X101a to X104a, S102a to S105a, X101b to X104b, and S102b to S105b described in FIG. 11A, and a description thereof will be omitted.

The user at house A turn on the power supply of handset 2a (X203a).

Base unit 1a at house A transmits a beacon signal to the power line (S205a). Note that, base unit 1a transmits beacon signals at a predetermined period.

Handset 2a that has received the beacon signal transmits an authentication request to base unit 1a (S206a).

Base unit 1a and handset 2a generate a temporary network key (S203).

When the temporary network key has been generated, handset 2a transmits a user approval request to base unit 1a in FIG. 12B (S207a).

Base unit 1a transmits an approval request to terminal 4a via the server in accordance with the user approval request in S207a (S208a and S209a). Base unit 1a communicates with terminal 4a via the server by using apparatus ID and transmits the approval request to terminal 4a.

Terminal 4a causes the display thereof to display the approval request for registration of handset 2a in accordance with the reception of the approval request in S209a (S210a).

When the user at house A has confirmed the approval request displayed on the display of terminal 4a, the user at house A performs an approval input operation (an operation to approve registration of handset 2) on terminal 4a (X204a).

Terminal 4a transmits an approval response to base unit 1a via the server in accordance with the approval input operation (S211a and S212a). Terminal 4a communicates with base unit 1a via the server by using apparatus ID and transmits the approval response to base unit 1a.

Base unit 1a stores a result of the approval response transmitted in S212a (S213a).

Base unit 1a performs an approval notification to handset 2a (S214a).

After base unit 1a performs the approval notification to handset 2a, base unit 1a requests the handset information from handset 2a (S215a).

Handset 2a transmits the handset information on handset 2a to base unit 1a in accordance with the request for the handset information (S216a).

Base unit 1a stores the handset information transmitted in S216a in storer 42 or 52 (S217a). Storer 42 or 52 may store, for example, handset management table 73b that has been described in FIG. 6B.

When base unit 1a has registered the handset information on handset 2a, base unit 1a performs a registration notification to handset 2a (S218a).

When handset 2a has received the registration notification from base unit 1a, base unit 1a and handset 2a generate a permanent network key (S204).

The sequence in FIG. 12C will be described. FIG. 12C illustrates exemplary operations in a case where handset 2a at house A receives a beacon signal of base unit 1b at house B (a beacon signal of an inappropriate base unit). Hereinafter, it is assumed that the handset information on handset 2a has not been registered in base unit 1a.

Base unit 1b at house B transmits a beacon signal to the power line (S219b). Note that, base unit 1b transmits beacon signals at a predetermined period.

Handset 2a that has received the beacon signal transmits an authentication request to base unit 1b at house B (S220b).

Base unit 1b at house B and handset 2a generate a temporary network key (S205).

When the temporary network key has been generated, handset 2a transmits a user approval request to base unit 1b at house B (S221b).

Base unit 1b at house B transmits an approval request to terminal 4b at house B via the server in accordance with the user approval request in S221b (S222b and S223b). Base unit 1b at house B communicates with terminal 4b via the server by using apparatus ID and transmits the approval request to terminal 4b.

Terminal 4b at house B causes the display thereof to display the approval request for registration of handset 2a in accordance with the reception of the approval request in S223b (S224b).

Since the user at house B has not performed an operation to register handset 2a, the user at house B performs a denial input operation (an operation not to approve registration of handset 2a) on terminal 4b (X205a).

Terminal 4b at house B transmits a denial response to base unit 1b via the server in accordance with the denial input operation (S225b and S226b). Terminal 4b communicates with base unit 1b via the server by using apparatus ID and transmits the denial response to base unit 1b.

Base unit 1b at house B stores a result of the denial response transmitted in S226b (S227b).

Base unit 1b at house B performs a denial notification to handset 2a (S228b).

When handset 2a has received the denial notification from base unit 1b at house B, handset 2a registers base unit 1b at house B, which has transmitted the beacon signal, as a base unit not to be connected in PLC (S229b). Handset 2a configures the authentication state to an initial value (S230b).

Base unit 1b at house B transmits a beacon signal to the power line (S23 1b).

Since handset 2a has registered base unit 1b at house B as a base unit not to be connected in S229b, handset 2a ignores the beacon signal of base unit 1b (S232b).

Base unit 1a at house A transmits a beacon signal to the power line (S233a).

Since handset 2a has not registered base unit 1a at house A as a base unit not to be connected, handset 2a receives the beacon signal of base unit 1a and transmits an authentication request to base unit 1a (S234a).

S206 indicates processing of registering the handset information on handset 2a. S206 is the same processing as S205a to S204a, and X204a described in FIGS. 12A and 12B, and a description thereof will be omitted.

As described above, the apparatus information registration system includes: base unit 1a, 1b (first apparatus) that is connected to the power line and network 6 and stores apparatus ID; and handset 2 (second apparatus) that is connected to the power line and performs PLC with base unit 1a, 1b. For example, when the power supply of handset 2a, 2b is turned on, handset 2a, 2b transmits an approval request, which requests registration approval for registration of the handset information on handset 2a, 2b in base unit 1a, 1b, to base unit 1a, 1b based on PLC. Base unit 1a, 1b transmits, in accordance with the reception of the approval request, the approval request, which requests the registration approval for registration of the handset information, to terminal 4a, 4b tied to apparatus ID. In a case where base unit 1a, 1b has received an approval response to the approval request from terminal 4a, 4b, base unit 1a, 1b registers the handset information on handset 2a, 2b.

As described above, even in a case where base unit 1a, 1b registers the handset information on handset 2a, 2b, the user can easily cause handset information on handset 2 to be registered in base unit 1a, 1b.

Note that, although base unit 1a, 1b communicates with terminal 4a, 4b via the server (network 6) in the above description, the present disclosure is not limited thereto. Base unit 1a, 1b and terminal 4a, 4b may communicate via router 3a, 3b. In this case, the apparatus ID issuance processing is not necessary.

The respective embodiments have been described above. Hereinafter, variations of the respective embodiments will be described.

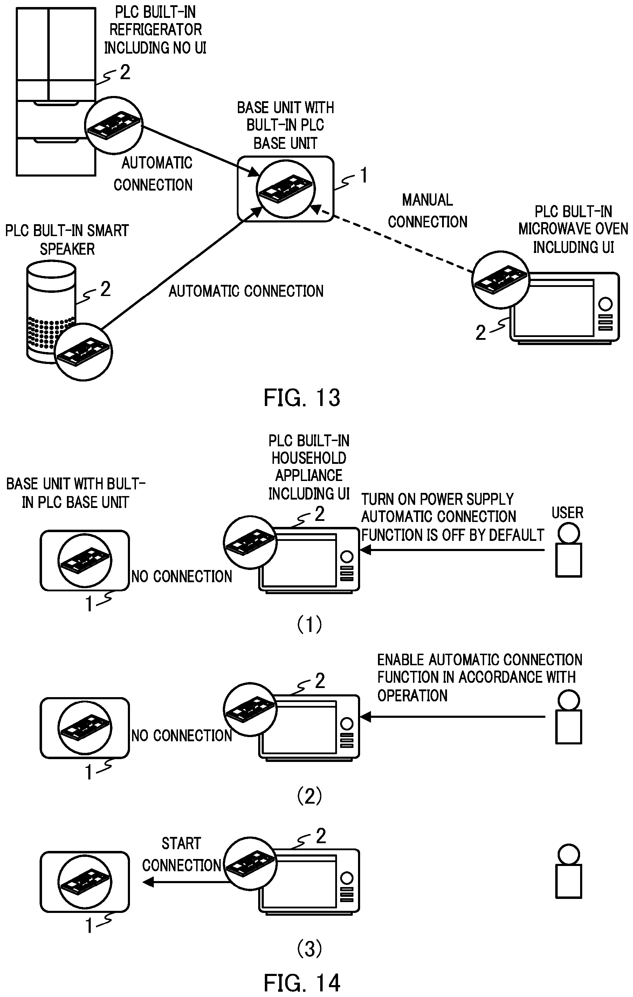

FIG. 13 is a diagram provided for describing examples of automatic connection and manual connection of handset 2. FIG. 13 illustrates base unit 1 and three handsets 2. For example, as illustrated in FIG. 13, handset 2 may be a refrigerator including no UI, a microwave oven including a UI, or a smart speaker including no UI.

The connection of handset 2 to a network (including the PLC network and network 6) may be configured to be the automatic connection or the manual connection based on the function or type of handset 2.

For example, handset 2, such as a refrigerator, generally includes no UI. Accordingly, the manual connection to a network is difficult for handset 2 including no UI, such as a refrigerator, and the automatic connection may be configured.

That is, in a case where the power supply of handset 2 including no UI is turned on, handset 2 including no UI may be automatically connected to a network. Thus, an operation burden on the user is reduced.

Further, for example, handset 2 such as a microwave oven generally includes a UI. Accordingly, handset 2 including a UI, such as a microwave oven, can be manually connected to a network, and the manual connection may be configured.

That is, in a case where the power supply of handset 2 including a UI is turned on, handset 2 including the UI may be connected to a network in accordance with an operation of the user. Thus, it is possible to protect the user's privacy. As a matter of course, the automatic connection to a network may be configured even for handset 2 including a UI.

Further, for example, handset 2 such as a smart speaker is generally connected to a network for operation. Accordingly, the automatic connection to a network may be configured for handset 2 such as a smart speaker.

That is, in a case where the power supply of handset 2, which is connected to a network for operation, is turned on, handset 2 may be automatically connected to the network. Thus, an operation burden on the user is reduced.

FIG. 14 is a diagram provided for describing an example of the automatic connection and the manual connection of handset 2. FIG. 14 illustrates base unit 1 and handset 2. Handset 2 is a handset including a UI.

As illustrated in (1) of FIG. 14, the automatic connection function of handset 2 may be off by default.

As illustrated in (2) of FIG. 14, in a case where handset 2 accepts an operation to configure the automatic connection from the user, handset 2 may enable (turn on) the automatic connection function. Then, as illustrated in (3) of FIG. 14, handset 2 may be connected to base unit 1 (start an authentication request) based on PLC.

As described above, the automatic connection function of handset 2 to a network may be off by default. Thus, it is possible to protect the user's privacy.

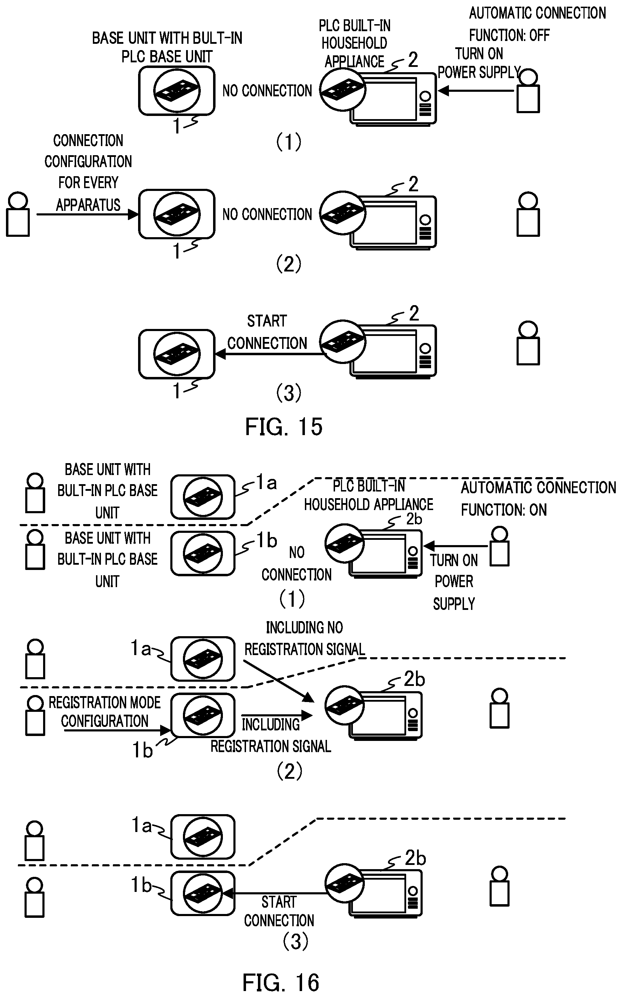

FIG. 15 is a diagram provided for describing an example of the automatic connection of handset 2 by base unit 1. FIG. 15 illustrates base unit 1 and handset 2.

As illustrated in (1) of FIG. 15, the automatic connection function of handset 2 may be off, for example, in an initial state such as after shipment.

As illustrated in (2) of FIG. 15, base unit 1 may turn on the automatic connection function of handset 2. For example, in a case where base unit 1 has accepted an operation to turn on the automatic connection function of handset 2 from the user via UI 13, base unit 1 causes a beacon signal to include an automatic connection signal for turning on the automatic connection function of handset 2. Even when the automatic connection function has been off, handset 2 turns on the automatic connection function in a case where handset 2 receives the beacon signal including the automatic connection signal.

Handset 2 that has received the beacon signal including the automatic connection signal and has turned on the automatic connection function is connected to base unit 1 as illustrated in (3) of FIG. 15.

As described above, base unit 1 causes, in accordance with an operation of the user, a beacon signal to include a signal for turning on the automatic connection function of handset 2. Thus, the user can collectively configure handsets 2, whose automatic connection function is off, to be on by operating base unit 1 without operating handsets 2 individually.

Note that, in a case where handset 2 including a UI receives a beacon signal including a signal for turning on the automatic connection function, handset 2a including the UI may cause the display thereof to display a screen for asking the user whether the automatic connection function is turned on. For example, handset 2 may cause the display thereof to display a text "connection to network?" and button images "Yes" and "No". In a case where handset 2 has accepted an operation to turn on the automatic connection function from the user (for example, in a case where the button image "Yes" has been pressed), handset 2 may turn on the automatic connection function.

Further, in a case where an operation to turn on the automatic connection function has been performed on handset 2, server 5 may not transmit an approval request for handset 2 to terminal 4. Thus, the user's confirmation work is reduced. Note that, in a case where an operation to turn on the automatic connection function is performed at a UI, handset 2 transmits information, which indicates an approval request for handset 2 may not be transmitted to terminal 4, to server 5. For example, handset 2 may transmit, together with the handset information, the information, which indicates an approval request for handset 2 may not be transmitted to terminal 4, to server 5.

Further, in a case where an operation to turn on the automatic connection function is performed at handset 2, server 5 may transmit an approval request for handset 2 to handset 2. That is, in a case where handset 2 includes a UI, server 5 may transmit an approval request for handset 2 to handset 2 and may not transmit an approval request for handset 2 to terminal 4.

FIG. 16 is a diagram provided for describing an example of suppression of erroneous connection of handset 2 to base unit 1. FIG. 16 illustrates base unit 1a at house A. Further, FIG. 16 illustrates base unit 1a and handset 2b at house B. Houses A and B belong to the same multiple dwelling houses.

As illustrated in (1) of FIG. 16, it is assumed that the automatic connection function of handset 2b at house B is on. It is assumed that handset 2b is registered at home B.

As illustrated in (2) of FIG. 16, the user at house B configures a registration mode for base unit 1b. When the registration mode has been configured, base unit 1b causes beacon signals to include a registration mode signal for a fixed period of time such as a few minutes, for example. After the passage of the fixed period of time, base unit 1b transmits a beacon signal including no registration mode signal (a normal beacon signal).

A beacon signal of base unit 1b at house B reaches handset 2b at house B. Further, a beacon signal of base unit 1a at house A reaches handset 2b at house B via the switchboard of the multiple dwelling houses. When the power supply of handset 2b at house B, whose automatic connection function is configured to be on, is turned on, handset 2b at house B ignores the beacon signal of base unit 1a at house A, which includes no registration mode signal, and receives the beacon signal of base unit 1b at house B, which includes a registration mode signal. Then, as illustrated in (3) of FIG. 16, handset 2b at house B is connected to base unit 1b at house B.

As described above, when the registration mode has been configured, base unit 1b at house B transmits beacon signals including a registration mode signal for the fixed period of time. Handset 2b whose automatic connection function is on receives a beacon signal including a registration mode signal. Thus, handset 2b at house B can be connected to base unit 1b at house B without being erroneously connected to base unit 1a at house A, which is not configured to the registration mode.

Note that, in the operation of the registration mode configuration in (2) of FIG. 16, base unit 1a, 1b may accept information on the apparatus type of a handset that is registered. Then, base unit 1a, 1b may cause a beacon signal to include a registration mode signal and an apparatus type signal indicating the apparatus type of the handset accepted from the user.

For example, in a case where handset 2b that is registered at house B is a microwave oven, base unit 1b at house B accepts the apparatus type "microwave oven" as the apparatus type of handset 2b that is registered. Base unit 1b then causes a beacon signal to include an apparatus type signal indicating "microwave oven".

Here, it is assumed that the time of registration mode configuration for base unit 1a and the time of registration mode configuration for base unit 1b overlap at houses A and B. In this case, a beacon signal outputted by base unit 1a at house A may also include a registration mode signal and handset 2b at house B may receive the beacon signal of base unit 1a at house A.

However, as described above, in the operation of the registration mode configuration, base unit 1a, 1b accepts information on the apparatus type of a handset that is registered, and causes a beacon signal to include an apparatus type signal indicating the accepted apparatus type.

For example, base unit 1a at house A accepts a refrigerator, and base unit 1b at house B accepts a microwave oven. In this case, handset 2b at house B, which is the microwave oven, ignores a beacon signal of base unit 1a at house A, which includes a registration mode signal and an apparatus type signal indicating the refrigerator, and receives a beacon signal of base unit 1b at house B, which includes a registration mode signal and an apparatus type signal indicating the microwave oven.

Thus, when the registration mode has been configured, base unit 1a, 1b transmits a beacon signal including a registration mode signal and an apparatus type signal indicating the apparatus type of a handset that is registered. Handset 2b receives a beacon signal of base unit 1b, which includes a registration mode signal and an apparatus type signal matching the apparatus type of handset 2b. Thus, it is possible to suppress erroneous connection of handset 2b to base unit 1a.

Note that, base unit 1a, 1b may cause a beacon signal to include an apparatus type signal and may not cause a beacon signal to include a registration mode signal. That is, a beacon signal including an apparatus type signal may be interpreted as a beacon signal indicating a registration mode for a fixed period of time.

The variations have been described above. In the embodiments described above, the expressions "... processor", "... -er", "... -or", and "... -ar" used for the components may be replaced with other expressions such as "... circuitry", "... assembly", "... device", "... unit", or "... module".

Although the embodiments have been described with reference to the accompanying drawings, the present disclosure is defined in the appended claims.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a field programmable gate array (FPGA) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

### Industrial Applicability

The present disclosure is useful for PLC.

### Reference Signs List

1, 1a, 1b Base unit
2, 2a, 2b Handset
3, 3a, 3b Router
4, 4a, 4b Terminal
5 Server
6 Network

## Claims

1. An apparatus information registration system, comprising:
a first apparatus (1) that is connected to a power line and a network (6);
a second apparatus (2) that is connected to the power line and configured to communicate with the first apparatus (1); and
a server (5) that is configured to store first apparatus information on the first apparatus (1) in association with user information on a user of the first apparatus (1), is connected to the network (6), and is configured to communicate with the first apparatus (1), wherein
the second apparatus (2) is configured to acquire the first apparatus information from the first apparatus (1) via the power line,
the second apparatus (2) is configured to transmit the first apparatus information having been acquired and second apparatus information on the second apparatus (2) to the server (5) via the first apparatus (1),
the server (5) is configured to acquire the user information corresponding to the first apparatus information having been transmitted from the second apparatus (2),
the server (5) is configured to transmit approval request information to a terminal (4) tied to the user information having been acquired, the approval request information requesting approval for registration of the second apparatus information, and
in a case where the server (5) receives approval response information from the terminal (4), the server (5) is configured to register the second apparatus information, the approval response information approving the registration of the second apparatus information.

2. The apparatus information registration system according to claim 1, wherein in a case where a power supply of the second apparatus (2) is turned on, the second apparatus (2) is configured to acquire the first apparatus information without an operation of the user, and is configured to transmit the first apparatus information and the second apparatus information on the second apparatus (2) to the server (5) via the first apparatus (1).

3. The apparatus information registration system according to claim 1, wherein the second apparatus (2) is configured to acquire the first apparatus information in accordance with an operation of the user, and is configured to transmit the first apparatus information and the second apparatus information on the second apparatus (2) to the server (5) via the first apparatus (1).

4. The apparatus information registration system according to claim 1, wherein in a case where a power supply of the second apparatus (2) is turned on, the second apparatus (2) is configured to determine, based on a function or a type of the second apparatus (2), whether to acquire the first apparatus information without an operation of the user.

5. The apparatus information registration system according to claim 1, wherein the second apparatus (2) is configured to acquire, in accordance with an automatic connection signal included in a beacon signal of the first apparatus (1), the first apparatus information without an operation of the user, and is configured to transmit the first apparatus information and the second apparatus information on the second apparatus (2) to the server (5) via the first apparatus (1).

6. The apparatus information registration system according to claim 1, wherein in a case where the second apparatus (2) receives an automatic connection signal included in a beacon signal of the first apparatus (1), the second apparatus (2) is configured to cause a display of the second apparatus (2) to display a screen for asking whether to acquire the first apparatus information without an operation of the user.

7. The apparatus information registration system according to claim 6, wherein in a case where an operation to acquire the first apparatus information without the operation of the user is performed at the second apparatus (2), the server (5) is configured to not transmit the approval request information to the terminal (4).

8. The apparatus information registration system according to claim 6, wherein in a case where an operation to acquire the first apparatus information without the operation of the user is performed at the second apparatus (2), the server (5) is configured to transmit the approval request information to the second apparatus (2).

9. The apparatus information registration system according to claim 1, wherein:
the first apparatus (1) is configured to cause a beacon signal to include a registration mode signal in accordance with an operation of the user, and
in a case where the second apparatus (2) receives the beacon signal including the registration mode signal, the second apparatus (2) is configured to acquire the first apparatus information from the first apparatus (1) via the power line.

10. The apparatus information registration system according to claim 9, wherein:
the first apparatus (1) causes, in accordance with the operation of the user, the beacon signal to include an apparatus type signal indicating a type of the second apparatus (2), and
in a case where the type indicated by the apparatus type signal included in the beacon signal having been received matches the type of the second apparatus (2), the second apparatus (2) is configured to acquire the first apparatus information from the first apparatus (1) via the power line.

11. The apparatus information registration system according to claim 1, wherein:
in a case where the server (5) receives denial response information from the terminal (4), the server (5) is configured to perform a notification of non-registration of the second apparatus information to the second apparatus (2), the denial response information not approving the registration of the second apparatus information, and
in a case where the second apparatus (2) receives the notification of the non-registration from the server (5), the second apparatus (2) is configured to register, as a base unit not to be connected in communication via the power line, the first apparatus (1) in the first apparatus information having been transmitted by the second apparatus (2) to the server (5).

12. The apparatus information registration system according to claim 1, wherein in a case where the server (5) has transmitted the approval request information to the second apparatus (2) and has received the approval response information from the second apparatus (2), the server (5) is configured to register the second apparatus information.

## Patentansprüche

1. Vorrichtungsinformations-Registrierungssystem, umfassend:
eine erste Vorrichtung (1), die mit einer Stromleitung und einem Netzwerk (6) verbunden ist;
eine zweite Vorrichtung (2), die mit der Stromleitung verbunden und dazu ausgebildet ist, mit der ersten Vorrichtung (1) zu kommunizieren; und
einen Server (5), der dazu ausgebildet ist, erste Vorrichtungsinformation über die erste Vorrichtung (1) in Zuordnung zu Benutzerinformation über einen Benutzer der ersten Vorrichtung (1) zu speichern, der mit dem Netzwerk (6) verbunden ist und der dazu ausgebildet ist, mit der ersten Vorrichtung (1) zu kommunizieren, wobei
die zweite Vorrichtung (2) dazu ausgebildet ist, die erste Vorrichtungsinformation von der ersten Vorrichtung (1) über die Stromleitung zu erfassen,
die zweite Vorrichtung (2) dazu ausgebildet ist, die erfasste erste Vorrichtungsinformation und zweite Vorrichtungsinformation über die zweite Vorrichtung (2) über die erste Vorrichtung (1) an den Server (5) zu übertragen,
der Server (5) dazu ausgebildet ist, die Benutzerinformation zu erfassen, die der von der zweiten Vorrichtung (2) übertragenen ersten Vorrichtungsinformation entspricht,
der Server (5) dazu ausgebildet ist, Genehmigungsanforderungsinformation an ein Endgerät (4) zu übertragen, das mit der erfassten Benutzerinformation verknüpft ist, wobei die Genehmigungsanforderungsinformation eine Genehmigung für die Registrierung der zweiten Vorrichtungsinformation anfordert, und
für den Fall, dass der Server (5) Genehmigungsantwortinformation von dem Endgerät (4) empfängt, der Server (5) dazu ausgebildet ist, die zweite Vorrichtungsinformation zu registrieren, wobei die Genehmigungsantwortinformation die Registrierung der zweiten Vorrichtungsinformation genehmigt.

2. Vorrichtungsinformations-Registrierungssystem nach Anspruch 1, wobei für den Fall, dass eine Stromversorgung der zweiten Vorrichtung (2) eingeschaltet wird, die zweite Vorrichtung (2) dazu ausgebildet ist, die erste Vorrichtungsinformation ohne eine Betätigung des Benutzers zu erfassen, und dazu ausgebildet ist, die erste Vorrichtungsinformation und die zweite Vorrichtungsinformation über die zweite Vorrichtung (2) an den Server (5) über die erste Vorrichtung (1) zu übertragen.

3. Vorrichtungsinformations-Registrierungssystem nach Anspruch 1, wobei die zweite Vorrichtung (2) dazu ausgebildet ist, die erste Vorrichtungsinformation gemäß einer Betätigung des Benutzers zu erfassen, und dazu ausgebildet ist, die erste Vorrichtungsinformation und die zweite Vorrichtungsinformation über die zweite Vorrichtung (2) an den Server (5) über die erste Vorrichtung (1) zu übertragen.

4. Vorrichtungsinformations-Registrierungssystem nach Anspruch 1, wobei für den Fall, dass eine Stromversorgung der zweiten Vorrichtung (2) eingeschaltet wird, die zweite Vorrichtung (2) dazu ausgebildet ist, basierend auf einer Funktion oder einem Typ der zweiten Vorrichtung (2) zu ermitteln, ob die erste Vorrichtungsinformation ohne eine Betätigung des Benutzers erfasst werden soll.

5. Vorrichtungsinformations-Registrierungssystem nach Anspruch 1, wobei die zweite Vorrichtung (2) dazu ausgebildet ist, gemäß einem automatischen Verbindungssignal, das in einem Beacon-Signal der ersten Vorrichtung (1) enthalten ist, die erste Vorrichtungsinformation ohne eine Betätigung des Benutzers zu erfassen, und dazu ausgebildet ist, die erste Vorrichtungsinformation und die zweite Vorrichtungsinformation über die zweite Vorrichtung (2) an den Server (5) über die erste Vorrichtung (1) zu übertragen.

6. Vorrichtungsinformations-Registrierungssystem nach Anspruch 1, wobei für den Fall, dass die zweite Vorrichtung (2) ein automatisches Verbindungssignal empfängt, das in einem Beacon-Signal der ersten Vorrichtung (1) enthalten ist, die zweite Vorrichtung (2) dazu ausgebildet ist, eine Anzeige der zweiten Vorrichtung (2) zu veranlassen, einen Bildschirm zum Abfragen, ob die erste Vorrichtungsinformation ohne eine Betätigung des Benutzers erfasst werden soll, anzuzeigen.

7. Vorrichtungsinformations-Registrierungssystem nach Anspruch 6, wobei für den Fall, dass an der zweiten Vorrichtung (2) eine Betätigung zum Erfassen der ersten Vorrichtungsinformation ohne die Betätigung des Benutzers durchgeführt wird, der Server (5) dazu ausgebildet ist, die Genehmigungsanforderungsinformation nicht an das Endgerät (4) zu übertragen.

8. Vorrichtungsinformations-Registrierungssystem nach Anspruch 6, wobei für den Fall, dass an der zweiten Vorrichtung (2) eine Betätigung zum Erfassen der ersten Vorrichtungsinformation ohne die Betätigung des Benutzers durchgeführt wird, der Server (5) dazu ausgebildet ist, die Genehmigungsanforderungsinformation an die zweite Vorrichtung (2) zu übertragen.

9. Vorrichtungsinformations-Registrierungssystem nach Anspruch 1, wobei:
die erste Vorrichtung (1) dazu ausgebildet ist, gemäß einer Betätigung des Benutzers zu veranlassen, dass ein Beacon-Signal ein Registrierungsmodussignal enthält, und
für den Fall, dass die zweite Vorrichtung (2) das Beacon-Signal empfängt, das das Registrierungsmodussignal enthält, die zweite Vorrichtung (2) dazu ausgebildet ist, die erste Vorrichtungsinformation von der ersten Vorrichtung (1) über die Stromleitung zu erfassen.

10. Vorrichtungsinformations-Registrierungssystem nach Anspruch 9, wobei:
die erste Vorrichtung (1) gemäß der Betätigung des Benutzers veranlasst, dass das Beacon-Signal ein Vorrichtungstypsignal enthält, das einen Typ der zweiten Vorrichtung (2) angibt, und
für den Fall, dass der durch das Vorrichtungstypsignal, das in dem empfangenen Beacon-Signal enthalten ist, angegebene Typ mit dem Typ der zweiten Vorrichtung (2) übereinstimmt, die zweite Vorrichtung (2) dazu ausgebildet ist, die erste Vorrichtungsinformation von der ersten Vorrichtung (1) über die Stromleitung zu erfassen.

11. Vorrichtungsinformations-Registrierungssystem nach Anspruch 1, wobei:
für den Fall, dass der Server (5) Ablehnungsantwortinformation von dem Endgerät (4) empfängt, der Server (5) dazu ausgebildet ist, eine Benachrichtigung über die Nicht-Registrierung der zweiten Vorrichtungsinformation an die zweite Vorrichtung (2) durchzuführen, wobei die Ablehnungsantwortinformation die Registrierung der zweiten Vorrichtungsinformation nicht genehmigt, und
für den Fall, dass die zweite Vorrichtung (2) die Benachrichtigung über die Nicht-Registrierung von dem Server (5) empfängt, die zweite Vorrichtung (2) dazu ausgebildet ist, die erste Vorrichtung (1) in der ersten Vorrichtungsinformation, die von der zweiten Vorrichtung (2) an den Server (5) übertragen wurde, als eine Basiseinheit zu registrieren, die nicht in Kommunikation über die Stromleitung zu verbinden ist.

12. Vorrichtungsinformations-Registrierungssystem nach Anspruch 1, wobei für den Fall, dass der Server (5) die Genehmigungsanforderungsinformation an die zweite Vorrichtung (2) übertragen hat und die Genehmigungsantwortinformation von der zweiten Vorrichtung (2) empfangen hat, der Server (5) dazu ausgebildet ist, die zweite Vorrichtungsinformation zu registrieren.

## Revendications

1. Système d'enregistrement d'informations d'appareil, comprenant :
un premier appareil (1) qui est connecté à une ligne électrique et à un réseau (6) ;
un second appareil (2) qui est connecté à la ligne électrique et configuré pour communiquer avec le premier appareil (1) ; et
un serveur (5), qui est configuré pour stocker des informations de premier appareil sur le premier appareil (1) en association avec des informations d'utilisateur sur un utilisateur du premier appareil (1), est connecté au réseau (6) et est configuré pour communiquer avec le premier appareil (1), dans lequel
le second appareil (2) est configuré pour acquérir les informations de premier appareil à partir du premier appareil (1) par l'intermédiaire de la ligne électrique,
le second appareil (2) est configuré pour transmettre les informations de premier appareil ayant été acquises et des informations de second appareil sur le second appareil (2) au serveur (5) par l'intermédiaire du premier appareil (1),
le serveur (5) est configuré pour acquérir les informations d'utilisateur correspondant aux informations de premier appareil ayant été transmises à partir du second appareil (2),
le serveur (5) est configuré pour transmettre des informations de requête d'approbation à un terminal (4) lié aux informations d'utilisateur ayant été acquises, les informations de requête d'approbation demandant une approbation pour l'enregistrement des informations de second appareil et
dans un cas où le serveur (5) reçoit des informations de réponse d'approbation à partir du terminal (4), le serveur (5) est configuré pour enregistrer les informations de second appareil, les informations de réponse d'approbation approuvant l'enregistrement des informations de second appareil.

2. Système d'enregistrement d'informations d'appareil selon la revendication 1, dans lequel, dans un cas où une alimentation électrique du second appareil (2) est activée, le second appareil (2) est configuré pour acquérir les informations de premier appareil sans opération de l'utilisateur et est configuré pour transmettre les informations de premier appareil et les informations de second appareil sur le second appareil (2) au serveur (5) par l'intermédiaire du premier appareil (1).

3. Système d'enregistrement d'informations d'appareil selon la revendication 1, dans lequel le second appareil (2) est configuré pour acquérir les informations de premier appareil conformément à une opération de l'utilisateur et est configuré pour transmettre les informations de premier appareil et les informations de second appareil sur le second appareil (2) au serveur (5) par l'intermédiaire du premier appareil (1).

4. Système d'enregistrement d'informations d'appareil selon la revendication 1, dans lequel, dans un cas où une alimentation électrique du second appareil (2) est activée, le second appareil (2) est configuré pour déterminer, sur la base d'une fonction ou d'un type du second appareil (2), s'il faut acquérir ou non les informations de premier appareil sans opération de l'utilisateur.

5. Système d'enregistrement d'informations d'appareil selon la revendication 1, dans lequel le second appareil (2) est configuré pour acquérir, conformément à un signal de connexion automatique inclus dans un signal de balise du premier appareil (1), les informations de premier appareil sans opération de l'utilisateur et est configuré pour transmettre les informations de premier appareil et les informations de second appareil sur le second appareil (2) au serveur (5) par l'intermédiaire du premier appareil (1).

6. Système d'enregistrement d'informations d'appareil selon la revendication 1, dans lequel, dans un cas où le second appareil (2) reçoit un signal de connexion automatique inclus dans un signal de balise du premier appareil (1), le second appareil (2) est configuré pour amener un affichage du second appareil (2) à afficher un écran pour demander s'il faut acquérir ou non les informations de premier appareil sans opération de l'utilisateur.

7. Système d'enregistrement d'informations d'appareil selon la revendication 6, dans lequel, dans un cas où une opération pour acquérir les informations de premier appareil sans opération de l'utilisateur est effectuée au niveau du second appareil (2), le serveur (5) est configuré pour ne pas transmettre les informations de requête d'approbation au terminal (4).

8. Système d'enregistrement d'informations d'appareil selon la revendication 6, dans lequel, dans un cas où une opération pour acquérir les informations de premier appareil sans opération de l'utilisateur est effectuée au niveau du second appareil (2), le serveur (5) est configuré pour transmettre les informations de requête d'approbation au second appareil (2).

9. Système d'enregistrement d'informations d'appareil selon la revendication 1, dans lequel :
le premier appareil (1) est configuré pour amener un signal de balise à inclure un signal de mode d'enregistrement conformément à une opération de l'utilisateur et
dans un cas où le second appareil (2) reçoit le signal de balise incluant le signal de mode d'enregistrement, le second appareil (2) est configuré pour acquérir les informations de premier appareil à partir du premier appareil (1) par l'intermédiaire de la ligne électrique.

10. Système d'enregistrement d'informations d'appareil selon la revendication 9, dans lequel :
le premier appareil (1) amène, conformément à l'opération de l'utilisateur, le signal de balise à inclure un signal de type d'appareil indiquant un type du second appareil (2) et
dans un cas où le type indiqué par le signal de type d'appareil inclus dans le signal de balise ayant été reçu correspond au type du second appareil (2), le second appareil (2) est configuré pour acquérir les informations de premier appareil à partir du premier appareil (1) par l'intermédiaire de la ligne électrique.

11. Système d'enregistrement d'informations d'appareil selon la revendication 1, dans lequel :
dans un cas où le serveur (5) reçoit des informations de réponse de refus à partir du terminal (4), le serveur (5) est configuré pour effectuer une notification de non-enregistrement des informations de second appareil au second appareil (2), les informations de réponse de refus n'approuvant pas l'enregistrement des informations de second appareil et
dans un cas où le second appareil (2) reçoit la notification du non-enregistrement à partir du serveur (5), le second appareil (2) est configuré pour enregistrer, en tant qu'unité de base ne devant pas être connectée en communication par l'intermédiaire de la ligne électrique, le premier appareil (1) dans les informations de premier appareil ayant été transmises par le second appareil (2) au serveur (5).

12. Système d'enregistrement d'informations d'appareil selon la revendication 1, dans lequel, dans un cas où le serveur (5) a transmis les informations de requête d'approbation au second appareil (2) et a reçu les informations de réponse d'approbation à partir du second appareil (2), le serveur (5) est configuré pour enregistrer les informations de second appareil.
